(19) Europäisches Patentamt / European Patent Office / Office européen des brevets

(11) **EP 3 984 686 A1**

(12) **EUROPÄISCHE PATENTANMELDUNG**

(43) Veröffentlichungstag:
**20.04.2022   Patentblatt 2022/16**

(21) Anmeldenummer: 20202334.7

(22) Anmeldetag: **16.10.2020**

(51) Internationale Patentklassifikation (IPC):
**B23K 26/03** (2006.01)   **B23K 26/38** (2014.01)
**B23K 26/70** (2014.01)   B23K 101/04 (2006.01)
**B23K 101/18** (2006.01)

(52) Gemeinsame Patentklassifikation (CPC):
**B23K 26/38; B23K 26/032; B23K 26/702;**
B23K 2101/04; B23K 2101/18

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Bystronic Laser AG
3362 Niederönz (CH)**

(72) Erfinder:
• **STEINLIN, Markus
8053 Zürich (CH)**
• **HAAS, Titus
4800 Zofingen (CH)**

(74) Vertreter: **Schwarz und Baldus Patentanwälte
Hermann-Schmid-Straße 10
80336 München (DE)**

(54) **VERFAHREN, REGELUNGSEINHEIT UND LASERSCHNEIDSYSTEM FÜR KOMBINIERTE BAHN- UND LASERPROZESSPLANUNG FÜR HOCHDYNAMISCHE ECHTZEIT-SYSTEME**

(57) In einem Aspekt betrifft die vorliegende Erfindung eine Regelungseinheit (RE) zur Berechnung eines orts- und zeitaufgelösten, kombinierten Sollwert-Datensatzes (SW-DS) zur Steuerung und/oder Regelung eines Laserschneidprozesses während des Laserschneidens mit einer Laserschneidmaschine (L), mit: einer Messdatenschnittstelle (MD-SS) zu zumindest einem Sensor (SENS) zum Messen von Sensordaten während des Schneidvorganges, einer Prozessschnittstelle (P-SS) zu einem ersten Speicher (S1), in dem ein Prozessmodell (PM) gespeichert ist, das den Laserschneidprozess repräsentiert und Zustandsdaten des Laserschneidprozesses und insbesondere ein daraus resultierendes Schneidergebnis schätzt; einer Maschinenschnittstelle (M-SS) zu einem zweiten Speicher (S2), in dem ein Maschinenmodell (MM) gespeichert ist, das das kinematische Verhalten des Laserschneidkopfes während dessen Bewegung repräsentiert und Zustandsdaten eines Bewegungsprozesses und insbesondere das daraus resultierende Schneidergebnis schätzt; einem Prozessor (P), der zur Ausführung eines Algorithmus bestimmt ist, der das Prozessmodell (PM) und das Maschinenmodell (MM) koppelt, insbesondere über einen Vorschubwert und/oder über einen Düsenabstandswert koppelt, wobei der Prozessor (P) weiterhin dazu bestimmt ist, über die Prozessschnittstelle (P-SS) auf das Prozessmodell (PM) in dem ersten Speicher (S1) und über die Maschinenschnittstelle (M-SS) auf das Maschinenmodell (MM) in dem zweiten Speicher (S2) zuzugreifen, um auf Basis der geschätzten Zustandsdaten des Laserschneidprozesses und des Bewegungsprozesses den orts- und zeitaufgelösten, kombinierten Sollwertdatensatz (SW-DS) mit aufeinander abgestimmten Sollwerten für den Laserschneidprozess und Sollwerten für den Bewegungsprozess unter Berücksichtigung der eingelesenen Sensordaten zu berechnen.

FIG. 3

EP 3 984 686 A1

**Beschreibung**

Die vorliegende Erfindung liegt auf dem Gebiet der Laserschneidtechnologie und betrifft insbesondere ein Verfahren zur Berechnung eines orts - und zeitaufgelösten, kombinierten Sollwertdatensatzes zur Steuerung und/oder Regelung eines Laserschneidprozesses, insbesondere zum Schneiden von Metallblechen und -röhren, eine entsprechende Regelungseinheit sowie ein Laserschneidsystem.

Ein Lasersystem, insbesondere zum Schneiden von Metallblechen und -röhren, mit Leistungen in der Regel >4 kW ist ein hochkomplexes System und umfasst mehrere physikalische und mechanische Komponenten, die über entsprechende Aktoren in geeigneter Weise und insbesondere elektronisch angesteuert werden, wie beispielsweise einen Laserschneidkopf oder ein Transportsystem für das zu schneidende Werkstück. Im Rahmen des Schneidprozesses müssen diese Komponenten bewegt werden. Da diese Komponenten teilweise über eine hohe Masse (z.B. ca. 15-20 kg für einen Schneidkopf und ca. 400 kg für die den Schneidkopf tragende Brücke sowie ca. 70 kg für den Wagen) verfügen, ist es wichtig, die Trägheitskräfte bei deren Bewegung zur Ausführung des Schneidvorgangs in ausreichendem Maß berücksichtigen zu können, um eine ausreichende Qualität des Schneidvorgangs sicherstellen zu können.

Im Stand der Technik, z.B. in der US 2015/165549 A1 sind Verfahren bekannt, Maßnahmen bereitzustellen, um die Qualität des Schneidvorgangs zu verbessern, wie beispielsweise eine Steuerung von primären und/oder sekundären Prozessparametern auf Basis von erfassten Sensordaten, beispielsweise Fotodiodensignalen oder Kamerabildern, die einen Zustand der Prozesszone erfassen.

Die im Stand der Technik bekannten Maßnahmen stellen hauptsächlich auf die physikalischen Vorgänge des Schneidprozesses ab. Die kinematischen Vorgänge werden dabei nachteiliger Weise nicht berücksichtigt. Dies kann jedoch zu Qualitätseinbußen führen, etwa dann, wenn eine rasche Änderung des Vorschubs, typischerweise bei Ecken und kleinen Radien, zwingend ist, so dass hohe Trägheitskräfte aktiviert werden, was zu Konturfehlern im Schneidprozesses oder zu anderen Qualitätseinbußen führen kann.

Weiterhin ist grundsätzlich eine prädiktive Regelung (Model Predictive Control - MPC) bekannt. Dabei werden anhand eines Modells optimale Sollwerte ermittelt. Die Sollwerte basieren auf Modellannahmen sowie aktuellen Messgrößen. Das Optimum kann durch eine Zielvorgabe definiert werden. Solche Anwendungen sind zum Beispiel in Chemieanlagen erfolgreich in der Anwendung. Ebenfalls wird die prädiktive Regelung, MPC, für diverse akademische Bahnplanungsprobleme genutzt. Bei der Umsetzung von MPC für Werkzeugmaschinen stellen die hohen Taktraten sowie die hohe Komplexität ein Hindernis für die Echtzeitfähigkeit dar.

Um die Prozessstabilität sowie die Produktivität des Laserschneidprozesses im Anwendungsbereich Schneiden von Metallblechen und -röhren zu verbessern, besteht ein Bedarf nach einer Lösung, um die Prozesssollwerte und die Bahnsollwerte durch eine gesamtheitliche Sollwertdefinition - also unter Berücksichtigung des physikalischen Laserschneidprozesses und des kinematischen Bewegungsprozesses) aufeinander abgestimmt regeln zu können. Muss z.B. der Prozessvorschub reduziert werden, weil die Bahn, an Stellen mit hoher Krümmung, nicht genügend schnell abgefahren werden kann (Vorgaben aus dem kinematischen Prozess), so sollen sich die Prozesssollwerte (physikalischer Prozess) entsprechend automatisch anpassen. Muss in einem anderen Beispiel der Prozessvorschub reduziert werden, weil der Prozess die Schmelze nicht schnell genug ausblasen kann (Vorgaben aus dem physikalischen Prozess), so sollen die Bahnsollwerte (kinematischer Prozess) auch selbständig bzw. automatisch angepasst werden.

Die vorliegende Erfindung hat sich deshalb zur Aufgabe gestellt, die Qualität des Laserschneidvorganges zu verbessern und dabei eine möglichst hohe Prozessstabilität und Produktivität zu gewährleisten. Insbesondere sollen neben den physikalischen Zuständen des Laserschneidprozesses auch kinematische Zustände der bewegten Massen, insbesondere des Laserschneidkopfes und/oder der ihn tragenden Brücke oder anderer Komponenten der Laserschneidmaschine, bei der Regelung des Laserschneidprozesses berücksichtigt werden. Unter Zuständen des Laserschneidprozesses zählen mitunter der Zustand des Schneidkopfes, z.B. ein Verschmutzungsgrad, thermische Effekte der Optik und des Strahlenganges und Umgebungsparameter, beinhaltend Luftfeuchtigkeit, Temperatur, Luftdruck etc.

In einem ersten Aspekt betrifft die Erfindung ein (zumindest teilweise computerimplementiertes) Verfahren zur Berechnung eines orts- und zeitaufgelösten, kombinierten Sollwertdatensatzes zur Steuerung und/oder Regelung eines Laserschneidprozesses einer Laserschneidmaschine mit einem Laserschneidkopf während des Laserschneidens, insbesondere von Metallblechen oder -röhren, mit folgenden Verfahrensschritten:

- Messen von Sensordaten während des Schneidvorganges;
- Bereitstellen eines in einem ersten Speicher gespeicherten Prozessmodells, das den Laserschneidprozess repräsentiert und/oder modelliert und Zustandsdaten des Laserschneidprozesses und insbesondere ein daraus resultierendes Schneidergebnis schätzt (und optional auch indirekte Prozessparameter, also Parameter des Schneidprozesses, die sich aufgrund der Einstellungen ergeben, wie z.B. Konturabweichungen oder eine Schnittspaltbreite);
- Bereitstellen eines in einem zweiten Speicher gespeicherten Maschinenmodells, das das kinematische Verhalten des Laserschneidkopfes (oder übergeordneter mechanischer Strukturen der Laserschneidmaschine, wie z.B. eines mobilen Trägers, wie z.B. einer Brücke) während dessen Bewegung repräsentiert und/oder modelliert und Zustandsdaten eines Bewegungsprozesses und insbesondere das daraus resultierende Schneidergebnis (insbesondere mit Konturabweichungen) schätzt;

- wobei das Prozessmodell und das Maschinenmodell gekoppelt sind, insbesondere über einen Vorschubwert für den Laserkopf und/oder über einen Düsenabstandswert gekoppelt sind;

- Zugreifen auf das Prozessmodell in dem ersten Speicher und auf das Maschinenmodell in dem zweiten Speicher durch eine Regelungseinheit, um auf Basis der geschätzten Zustandsdaten des Laserschneidprozesses und des Bewegungsprozesses den orts- und zeitaufgelösten, kombinierten Sollwertdatensatz mit aufeinander abgestimmten Sollwerten für den Laserschneidprozess und Sollwerten für den Bewegungsprozess unter Berücksichtigung der eingelesenen Sensordaten zu berechnen.

Mit dem hier vorgestellten Verfahren können wichtige Vorteile erreicht werden. So kann die Qualität der geschnittenen Teile erhöht werden und dies insbesondere unter Berücksichtigung der aktuellen Prozessbedingungen (Maschine, Abnutzung, Standzeit der Komponenten...). Zudem kann der Anteil von fehlgeschnittenen Bauteilen oder Ausschuss verringert werden. Durch den Einsatz spezifischer Modelle und zugehöriger Algorithmen können die Qualität und/oder etwaige Konturfehler sogar bereits im Vorfeld geschätzt und die Produktivität kann gesteigert werden. Dies wird unter anderem dadurch möglich, dass Qualitätsabweichungen (durch die Kopplung von Prozess- und Maschinenmodell) bereits im Vorfeld erkannt und vermieden werden können.

Der Sollwertdatensatz ist ort- und zeitaufgelöst. Dies bedeutet, dass der Sollwertdatensatz spezifisch für eine Position auf der durch den Schneidplan vorgegebenen Bahn bzw. Geometrie (als die dreidimensionale Beschreibung des zu schneidenden Werkstücks oder Bauteils) und spezifisch für einen Zeitpunkt während des Laserschneiden und somit während der Abarbeitung der Geometrie über die Zeit ist (Trajektorie). Der Sollwertdatensatz ist ort- und zeitabhängig. Der Sollwertdatensatz wird dynamisch für jede Position und jeden Zeitpunkt erzeugt.

Die mathematischen Ableitungen der bahnbezogenen Parameter werden in bekannten Gleichungssystem repräsentiert für Position, Geschwindigkeit, Beschleunigung und Ruck.

Der Sollwertdatensatz ist insofern "kombiniert", als dass er sowohl Sollwerte für den Laserschneidprozess zur Ansteuerung der Komponenten der Laserschneidmaschine (z.B. Vorschub, Schneidgas...) als auch Sollwerte zur Ansteuerung der Aktoren oder Antriebsaggregate zur Bewegung des Schneidkopfes auf kombinierte bzw. auf koordinierte Weise miteinander abgleicht und ausgibt. Es wird somit nicht einzelnen ein Sollwertdatensatz für das Laserschneiden und unabhängig davon ein Sollwertdatensatz für die Bewegung des Laserschneidkopfes erzeugt, sondern vielmehr wird ein gemeinsamer, gesamtheitlicher Sollwertdatensatz berechnet, der beide/n Aspekte (Laserschneiden und Mechanik der bewegten Massen) vereint und Rechnung trägt. Der Sollwertdatensatz enthält somit Vorgaben für zwei unterschiedliche Prozesse, nämlich für den Laserschneidprozess und für das Bewegen des Laserschneidkopfes. Insbesondere werden die Delays der verschiedenen mechanischen Komponenten und/oder Subsysteme bei der Berechnung berücksichtigt. Je nach Position des Laserschneidkopfes auf der vorgegebenen Trajektorie, werden unterschiedliche Sollwerte berechnet. Je nach dem Zeitpunkt an dem sich der Laserschneidkopf auf einem Punkt auf der Trajektorie befindet, werden unterschiedliche Sollwerte berechnet. Der berechnete Sollwertdatensatz ist somit abhängig vom Ort und vom Zeitpunkt.

Vorteilhafterweise kann die Qualität (z.B. die Grathöhe) mittels physikalischem Prozessmodell (z.B. Weber Zahl) abgeschätzt werden. Basierend auf der Modellschätzung werden die Schneidparameter optimal angepasst. Vorzugseise kann z.B. die Weber Zahl in Ecken und Radien konstant gehalten werden, wodurch beispielsweise die Fokuslage angepasst werden muss.

Der Sollwertdatensatz ist multidimensional und umfasst üblicherweise mehrere Datensätze für die einzelnen zu steuernden/regelnden Parameter, wie z.B. die Fokuslage, den Vorschub, den Düsenabstand. Der Sollwertdatensatz wird an die jeweiligen Aktuatoren weitergegeben, die dann die entsprechenden Komponenten der Laserschneidmaschine ansteuern oder regeln.

Die Steuerung und/oder Regelung des Laserschneidprozesses kann mit dem kombinierten Sollwertdatensatz somit vorteilhafter Weise in Abhängigkeit von der jeweiligen Geometrie (und/oder durch den Bezug zurzeit auch von der Trajektorie) erfolgen. So können beispielsweise Geradeausschnitte anders geregelt werden, und insbesondere schneller ausgeführt werden als Kurvenschnitte (insbesondere bei engen Krümmungen/Radien), um ein übereinstimmendes Arbeitsergebnis sicherzustellen. Das Arbeitsergebnis kann im Vorfeld als Vorgabe vom Anwender über eine Benutzerschnittstelle als Datensatz eingegeben werden.

Mit der Kombination des Prozessmodells und des Maschinenmodells zur kombinierten Berechnung des Sollwertedatensatz wird es möglich, einen Sollwertdatensatz zu berechnen, welcher nicht nur Konturfehler reduziert/limitiert, sondern zum Beispiel die Maschinenanregung (kleinste Schwingungen innerhalb der Toleranz sind denkbar) reduziert/beschränkt. Somit kann der Sollwertdatensatz derart berechnet werden, dass Zielgrößen wie Konturfehlerminimierung, Maschinenanregungsminimierung, minimaler Ruck erzielt werden können. Die beiden Modelle, Prozessmodell und Maschinenmodell, sind gekoppelt. Dies wird dadurch erreicht, dass eine Transformationsvorschrift bereitgestellt wird, die es ermöglicht, Vorgaben aus dem einen Modell in Vorgaben für das jeweils andere umzurechnen. Das Prozessmodell für das Laserschneiden basiert auf physikalischen Formeln, die insbesondere hydrodynamische Kenngrößen berücksichtigen, wie z.B. die Weberzahl.

Bei den Sensordaten kann es sich vorzugsweise um eine Vielzahl von unterschiedlichen Sensoren oder Messaufnehmern, Fühler handeln. Die Sensordaten können optischer Natur sein und somit beispielsweise von unterschiedlich positionierten Fotodioden und/oder zumindest einer Kamera kommen. Die Sensordaten können auch ein akustisches Signal insbesondere während des Laserschneidens repräsentieren. Weiterhin können die Sensoren mitunter als spektrale Intensitätssensoren (Eigenschaften der Schmelze wie Temperatur, Viskosität, Plasma, Materialeigenschaften), Temperatursensoren entlang des optischen Pfades bis zum Blech, Druck- und Feuchtigkeitssensoren für Schneidgas und/oder Sensoren zur Kennzeichnung der Bewegung des Laserschneidkopfes (zum Beispiel Geschwindigkeitssensoren, Beschleunigungssensoren etc.) ausgebildet sein.

Sowohl bei dem Laserschneidprozess als auch bei dem Bewegungsprozess für den Laserschneidkopf handelt es sich um multivariable, hochdynamische Prozesse. Grundsätzlich kann eine hochdynamische Bewegung (hier des Laserkopfes/Laserschneidkopfes) Konturfehler im geschnittenen Wertstück verursachen, die nicht mehr im Toleranzbereich liegen. Mit der hier vorgeschlagenen Kombination der beiden dynamischen Modelle (Maschine und Prozess) können diese Fehler - bei gegebenen Parametern - geschätzt und im Vorfeld kompensiert werden ohne, dass diese Fehler real auftreten und möglicherweise Ausschuss produziert wird. Das Maschinenmodell kann beispielsweise eine numerische Ausgabe bereitstellen, die indiziert, die Dynamik (Geschwindigkeit, Beschleunigung und/oder den Ruck) zu reduzieren oder die Achspositionen über automatisch generierte Steuerbefehle geringfügig anzupassen, um die erforderlichen Toleranzanforderungen zu erfüllen. Das Maschinemodell kann auch Steuerbefehle erzeugen, um die anderen mechanischen Komponenten der Laserschneidmaschine, wie z.B. der Brücke, entsprechend anzusteuern (Stichwort: schwingende Brücke, Resonanzschwingung). Typischerweise ist der Laserschneidkopf an einer Brücke, als Trägerkonstruktion angeordnet. Das Maschinenmodell kann dann eine Beschreibung der Brücke umfassen und beschreibt dadurch auch daran befestigte Komponenten wie z.B. den Schneidkopf.

Das Maschinenmodell simuliert das gesamte Bewegungsverhalten des Laserschneidkopfes, der zur Ausführung der Bewegung an einer Trägerkonstruktion, z.B. einer Brücke, gelagert ist. Der Laserschneidkopf mit seiner Trägerkonstruktion sind mechatronische Komponenten, die elektronisch ansprechbar sind. Das Maschinenmodell modelliert somit das kinematische Verhalten der Brücke mit dem Laserschneidkopf während des Laserschneidens. Das Maschinenmodell simuliert, mit welchen physikalischen Bewegungsparametern (z.B. Geschwindigkeit, Beschleunigung, Ruck/Jerk) sich der Laserschneidkopf auf der durch den Schneidplan vorgegebenen Trajektorie bewegt. Weiterhin simuliert das Maschinenmodell Abweichungen von der vorgegebenen Trajektorie und insbesondere auch das Einhalten von vorkonfigurierbaren Toleranzabweichungen. Das Maschinenmodell repräsentiert Änderungen des Bewegungsverhaltens, die zum Beispiel aus der Trägheit der bewegten Masse resultieren. Das Maschinenmodell kann insbesondere dazu genutzt werden, die physikalischen Bewegungsparameter vorherzusagen oder zu schätzen. Folgende Eingangsdaten werden dem Modell zur Berechnung zugeführt: Positionen (Soll und Ist), Geschwindigkeiten (Soll und Ist), Beschleunigungen (Soll und Ist), Ruck (Soll und Ist). Optional können noch weitere Eingangsdaten berücksichtigt werden, wie: Temperaturen der Antriebe, Beschleunigungssensoren (am Kopf und anderen relevanten Orten auf der Maschinenstruktur) und/oder Modellkorrekturwerte, welche aus einem Modellupdate resultieren. Das Maschinenmodell kann verwendet werden, um zukünftige Zustandsdaten des Bewegungsprozesses zu schätzen und insbesondere ein daraus resultierendes oder dadurch bedingtes Arbeitsergebnis. Das Arbeitsergebnis kann zum Beispiel auch Fehler beinhalten, so dass "Fehler", wie Konturfehler oder Konturabweichungen (möglicherweise noch innerhalb der Toleranzen) und/oder Qualitätseinbußen im Vorfeld geschätzt werden können. Beispielsweise können durch einen zu hohen Vorschub bei großer Masse des Laserschneidkopfes und der ihn ggf. tragenden Brücke, Schwingungen entstehen, die die Schnittqualität negativ beeinflussen (z.B. Wellenschnitt). Dies kann vorteilhafterweise mit der hier vorgeschlagenen Lösung ausgeschlossen werden.

In einer bevorzugten Ausführungsform der Erfindung ist es in einer Konfigurationsphase konfigurierbar, welches Maschinenmodell aus einer Menge von Maschinenmodellen, verwendet werden soll. Es können also, je nach Anwendung, verschiedene Maschinenmodelle verwendet werden. Dies kann grundsätzlich unabhängig vom Prozessmodell erfolgen. Dies Bestimmung des Maschinenmodells kann aber auch unter Berücksichtigung des Prozessmodells erfolgen. Die Bestimmung des Maschinenmodells kann insbesondere auch ohne Schätzung von Konturabweichungen des Schneidergebnisses erfolgen, wie z.B. Zwei-Massen-Schwinger (bzw. "double integrator"). Ein wichtiges Merkmal der Erfindung ist in der Kopplung der Modelle über die Geschwindigkeit und den Düsenabstand zu sehen.

Der Begriff "Schneidergebnis" bezieht sich auf das (geschätzte und/oder ermittelte) Arbeitsergebnis des Laserschneidvorganges. Das Arbeitsergebnis bzw. Schneidergebnis ist somit auf das jeweils geschnittene Teil bezogen. Das Arbeitsergebnis kann Information über mögliche Abweichungen vom SOLL (vorkonfigurierbare Soll-Werte) und/oder Fehler unterschiedlicher Art beinhalten. Dazu zählen zum Beispiel Konturabweichungen (innerhalb oder außerhalb der Toleranzgrenzen) und/oder Qualitätseinbußen, wie zum Beispiel eine hohe Kantenrauhigkeit, eine Riefenbildung, eine Gratbildung (Braue) und/oder ein Wellenschnitt. Das Arbeitsergebnis kann als digitaler Datensatz mit unterschiedlichen Parametern vorliegen und verarbeitet werden.

Das Prozessmodell simuliert den Laserschneidprozess, insbesondere von Metallblechen und -röhren mit einer Laserleistung von über 4kW. Das Prozessmodell betrifft somit den kompletten Schneidprozess während des Schneidvorganges. Das Prozessmodell simuliert die laserphysikalischen Parameter beim Laserschneiden (zum Beispiel Prozesskenngrößen, wie Fokusposition, Gasdruck, Düsenabstand, Laserleistung; aber auch Qualitätsmerkmale, wie Kantenrauhigkeit, Riefenbildung etc. sowie Einstellparameter, wie z.B. die Laserschneidgeschwindigkeit). Das Prozessmodell kann verwendet werden, um die Qualität des geschnittenen Teils zu schätzen. Basierend auf dieser Schätzung werden die Schneidparameter optimal eingestellt. Das Prozessmodell kann somit verwendet werden, um zukünftige Zustandsdaten des Schneidprozesses zu schätzen und insbesondere, um ein zukünftiges Arbeitsergebnis (Schneidqualität mit unterschiedlichen Qualitätsmerkmale) zu schätzen Für weitere Details eines Prozessmodells sei auf folgende Literaturstelle verwiesen:

A. F. H. Kaplan, "An analytical model of metal cutting with a laser beam," Journal of Applied Physics, vol. 79, no. 5, pp. 2198-2208, 1996.

M. Brügmann, M. Muralt, B. Neuenschwander, S. Wittwer und T. Feurer, "A theoretical model for reactive gas laser cutting of metals," Lasers in Manufacturing Conference, 2019.

M. Brügmann, M. Muralt, B. Neuenschwander, S. Wittwer und T. Feurer, "Optimization of Reactive Gas Laser Cutting Parameters based on a combination of Semi-Analytical modelling and Adaptive Neuro-Fuzzy Inference System (ANFIS)," Lasers in Manufacturing Conference, 2019.

W. Schulz, M. Niessen, U. Eppelt und K. Kowalick, Simulation of Laser Cutting, Springer Netherlands, 2009.

J. Zeng, "Mechanisms of brittle material erosion associated with high-pressure abrasive waterjet processing: A modeling and application study," Doctoral Thesis, 1992.

J. Zeng, J. Olson und C. Olson, "THE ABRASIVE WATERJET AS A PRECISION METAL CUTTING TOOL," 10th American Waterjet Conference, 1999.

Für das Maschinenmodell sei auf N. Lanz, D. Spescha, S. Weikert und K. Wegener, "Efficient Static and Dynamic Modelling of Machine Structures with Large Linear Motions," International Journal of Automation Technology, Bd. 12, pp. 622-630, 2018 sowie auf Titus Haas, "Set Point Optimisation for Machine Tools", ETH Zürich Verlag, 2018, download verfügbar unter: https://doi.org/10.3929/ethz-b-000271470 verwiesen.

Das Maschinenmodell simuliert die mechanischen Komponenten der Laserschneidmaschine, insbesondere den Laserschneidkopf und die Schneidbrücke, während der Bewegung und unter anderem auch eine Bahnplanung des Laserkopfes. Wie bei der klassischen Bahnplanung werden die Eigenschaften des Antriebsstrangs, z.B. maximale Beschleunigungs- und Bremsrampe der Achsen sowie der maximale Vorschub des Prozesses berücksichtig. Teilweise kann die Soll-Bahn auch anhand von geometrischen Regeln verrundet werden (Vorteil Rechenzeit). Erfindungsgemäß werden dabei auch die dynamischen Eigenschaften der Maschine berücksichtigt. Das hier beschriebene Verfahren kann mit einem Optimierungsalgorithmus und zusammen mit dem Maschinenmodell die Trajektorie aber weiter optimieren. Dabei wird die vorgegebene geometrische Toleranz unter Berücksichtigung der dynamischen Eigenschaften der Maschine (Masseträgheit und Nachgiebigkeit der Komponenten) erfüllt:

- Der geometrische Sollwert wird derart angepasst, dass die modellierten dynamischen Abweichungen innerhalb des Toleranzbandes zu liegen kommen;
- Reduktion der Beschleunigung, wo nötig;
- Erhöhung der Beschleunigung, wo möglich;
- Geometrische Kompensation der erwarteten Abweichung.

Vorzugsweise können das Prozessmodell und/oder das Maschinenmodell als neuronales Netzwerk implementiert sein. Bei dem neuronalen Netzwerk kann es sich zum Beispiel um ein Faltungsnetz (convolutional neural network, CNN) handeln. Das neuronale Netz kann mit einem Trainingsalgorithmus auf Basis von annotierten oder teil-annotierten Trainingsdaten trainiert worden sein. Bei dem Trainingsalgorithmus kann es sich um ein Verfahren zum überwachten Lernen (supervised learning) oder um ein halb überwachtes Lernverfahren (semi supervised learning) handeln. Der Trainingsalgorithmus kann auf historischen Daten basieren. Es können auch Methoden des Reinforcement Learning bei dem Modell-Update bzw. der Anpassung der Modelle zum Einsatz kommen. Durch das Reinforcement Learning ist es möglich, ohne Ausgangsdaten und (Vor)Wissen über den Laserschneidprozess, Lösungen zu diesem komplexen Problem zu finden. Zudem ist die aufwendige Erhebung und Bearbeitung von Trainingsdaten durch das Reinforcement Learning nicht notwendig.

Das Prozessmodell kann verwendet werden, um die resultierende Qualität (z.B. Grat) des Schneidprozesses vorausschauend zu berechnen oder zu schätzen. Ein Optimierer (ausgebildet zur Ausführung des Optimierungsalgorithmus') findet Prozessparameter, die den Qualitätsanforderungen genügen. Der Begriff "Prozessparameter" bezieht sich auf eine Teilmenge der erfindungsgemäß berechneten Sollwerte aus dem kombinierten SollwertDatensatz. Dabei sind das Prozessmodell und das Maschinenmodell direkt miteinander verknüpft (z.B. Geschwindigkeitsreduktion in der Ecke der Kontur oder bei Radien, um die Qualität konstant zu halten).

In einer bevorzugten Ausführungsform ist/sind das Prozessmodell und/oder das Maschinenmodell derart ausgebildet, dass zukünftige Zustände des Laserschneidprozesses und/oder zukünftige Zustände des Bewegungsprozesses, insbesondere zukünftige Positionen auf der Trajektorie des Laserschneidkopfes im Vorfeld geschätzt werden können.

Die Zustandsdaten des Bewegungsprozesses können vorzugsweise einen Vorschub des Laserschneidkopfes umfassen. Die Zustandsdaten des Bewegungsprozesses können auch eine Beschleunigung und/oder einen Ruck des Laserschneidkopfes oder anderer Maschinenkomponenten der Laserschneidmaschine umfassen.

Die Zustandsdaten des Laserschneidprozesses können vorzugsweise alle oder ausgewählte Kenngrößen umfassen, die für den Laserschneidprozesses relevant sind, wie beispielsweise die vorstehend genannten Prozesskenngrößen, nämlich z.B. Fokusposition, Gasdruck, Düsenabstand, Laserleistung.

In einer bevorzugten Ausführungsform der Erfindung kann das Verfahren weiterhin umfassen:

- Erfassen einer auf einer Benutzerschnittstelle eingegebenen Zielvorgabe zur Berechnung einer Kostenfunktion, auf deren Basis der kombinierte orts- und zeitaufgelöste Sollwertdatensatz berechnet wird, wobei die Zielvorgabe mehrere, voneinander abhängige Vorgaben umfasst, insbesondere eine Schnittqualitätsvorgabe, eine Robustheitsvorgabe des Schneidvorganges und eine Produktivitätsvorgabe.

In einer bevorzugten Ausführungsform sind die unterschiedlichen Vorgaben mit unterschiedlichen Gewichten belegt. Damit wird es möglich, die unterschiedlichen Vorgaben für das Arbeitsergebnis je nach Präferenz des Kunden (Anwenders) zu gewichten. Bei der Benutzerschnittstelle handelt es sich vorzugsweise um eine grafische Benutzerschnittstelle, die Schaltflächen umfasst. Dabei ist eine der Schaltflächen als mehrdimensionale Eingabeschaltfläche ausgebildet, über die die voneinander abhängigen unterschiedlichen Zielvorgaben mit nur einer Benutzereingabe erfasst werden können. Die Eingabeschaltfläche ist dabei derart ausgebildet, dass sie die Abhängigkeiten zwischen den einzelnen Zielvorgaben repräsentiert. Wählt der Anwender beispielsweise einen hohen Wert als Schnittqualitätsvorgabe und damit als Vorgabe für das Arbeitsergebnis, so kann er nur noch zulässige Vorgaben für die Produktivität vorgeben, also solche Produktivitätsvorgaben, die mit der getätigten Vorgabe für die Schnittqualität vereinbar bzw. physikalisch realisierbar sind. Unzulässige bzw. nicht vereinbare Zielvorgaben können somit vermieden werden (wie zum Beispiel hohe Schnittqualität, hohe Robustheit und hohe Produktivität). Bei einer unzulässigen Kombination wird vorteilhafterweise unmittelbar auf der Benutzerschnittstelle ein Hinweis mit einem Fehlersignal ausgegeben, das den User darauf hinweist, dass er andere Vorgaben wählen muss. Insgesamt kann sich damit Zuverlässigkeit und die Sicherheit des Verfahrens bzw. Systems verbessert werden.

In einer weiteren vorteilhaften Ausführungsform der Erfindung kann der kombinierte orts- und zeitaufgelöste Sollwertdatensatz Soll-Werte für direkte Prozessgrößen, wie Schneidgeschwindigkeit, Beschleunigung des Laserschneidkopfes, Laserleistung, Fokuslage, Pulsschema (insbesondere Pulsbreite und -Frequenz), Düsenabstand, Gasdruck, BPP (beam parameter product), Fokusdurchmesser und/oder Spaltbreite umfassen und/oder Soll-Werte bzw. Werte für indirekte Prozessgrößen, wie Streustrahlung, Qualitätsmerkmale, Spaltbreite, Neigung der Schneidkante, Temperaturverteilung in einer Schneidzone. Damit wird eine Regelung der indirekten Prozessgrößen (wie Schnittspaltbreite, Neigung der Schneidkante, Streustrahlung, Qualitätsmerkmale) möglich.

In einer weiteren vorteilhaften Ausführungsform der Erfindung kann das Verfahren einen schnellen Regelkreis auf eine erste Klasse von schnell regelbaren Parametern anwenden, der den Laserschneidprozess gemeinsam mit dem Vorschub des Laserschneidkopfes auf Basis von aktuell gemessenen Sensordaten und/oder auf Basis des berechneten Sollwertdatensatzes regelt.

Der schnelle Regelkreis ist ein innerer Regelkreis. In einer bevorzugten Ausführungsform der Erfindung werden bei oder nach Ausführung des schnellen Regelkreises keine Änderungen am Modell (Modellupdate) ausgeführt oder veranlasst. Der schnelle Regelkreis dient zur Regelung, insbesondere zur vorausschauenden oder prädiktiven Regelung, von einer ersten Klasse von Parametern. Bei der ersten Klasse von Parametern handelt es sich vorzugsweise um solche Parameter, die relativ geringe Zeitkonstanten haben (z.B. die Regelung der Geschwindigkeit) und somit schnell regelbar bzw. innerhalb der geforderten Regel Taktzeiten (vorzugsweise < 1ms) veränderlich sind. Grundsätzlich kann in einer Konfigurationsphase konfiguriert werden, welche Parameter der ersten Klasse zugeordnet werden. Die erste Klasse von Parametern kann zum Beispiel einen Schneidgeschwindigkeitsparameter, einen Parameter zur Fokuslage, einen Parameter zum Pulsschema und/oder einen Laserleistungsparameter umfassen.

In einer bevorzugten Ausführungsform erfolgt die "schnelle" Regelung auf Basis von zurückliegenden (historischen) und/oder aktuellen Sensordaten.

In einer weiteren vorteilhaften Ausführungsform der Erfindung kann das Verfahren einen langsamen Regelkreis auf eine zweite Klasse von langsam veränderlichen Parametern anwenden, der den Laserschneidprozess gemeinsam mit dem Vorschub des Laserkopfes auf Basis von aktuell gemessenen Sensordaten und/oder auf Basis des berechneten Sollwertdatensatzes regelt. Die zweite Klasse von Parametern hat eine hohe Latenz in der Umsetzung der Regelung bzw. der Änderung, wie z.B. der Veränderung des Gasdrucks oder der Veränderung der Fokuslage. Der Gasdruck sollte beim Schmelzschneiden üblicherweise in einem Bereich zwischen 1 und 25 bar und beim Brennschneiden im Bereich um 0,5 bar liegen.

Der langsame Regelkreis ist ein äußerer Regelkreis. Der langsame Regelkreis dient zur Regelung, insbesondere zur vorausschauenden oder prädiktiven Regelung, einer zweiten Klasse von Parametern. Bei der zweiten Klasse von Parametern handelt es sich vorzugsweise um solche Parameter, die relativ hohe Zeitkonstanten haben und somit nur langsam regelbar bzw. nicht innerhalb der geforderten Regel Taktzeiten veränderlich sind. Auch für diese zweite Klasse kann in einer Konfigurationsphase konfiguriert werden, welche Parameter der zweiten Klasse geordnet werden sollen. So kann zum Beispiel der Gasdruck und oder die Fokuslage der zweiten Klasse von Parametern zugeordnet werden.

In einer bevorzugten Ausführungsform erfolgt die "langsame" Regelung auf Basis von aktuellen Sensordaten und Modelldaten (prognostizierten bzw. geschätzten Daten).

Bei der Regelung von Parametern der zweiten Klasse also insbesondere Parametern, die höhere Latenzzeiten haben, ist es jedoch auch möglich, die Parameter der ersten Klasse (mit) zu regeln.

In einer weiteren vorteilhaften Ausführungsform der Erfindung können der schnelle und/oder der langsame Regelkreis als prädiktiver modell-basierter Regler (MPC) ausgebildet sein. Vorzugsweise ist zumindest der langsame Regelkreis als MPC Regler implementiert. Falls auch der schnelle Regelkreis als MPC Regler implementiert ist, wird die jeweilige Recheneinheit mit ausreichender Rechenleistung zur Verfügung gestellt.

Der prädiktive, modellbasierte Regler - auch als MPC-Regler bezeichnet - kann den Laserschneidprozess und/oder den Bewegungsprozess des Laserkopfes über das jeweilige Modellverhalten bis zu einem bestimmten Zeithorizont prädizieren (schätzen). Es kann nur das Eingangssignal mit den jeweiligen Maschinen - oder Prozessparameter für den nächsten Zeitschritt verwendet und danach die Optimierung wiederholt werden. Dabei wird die Optimierung im nächsten Zeitschritt mit dem dann aktuellen (gemessenen) Zustand über die erfassten Sensorsignale durchgeführt, was als eine Rückkopplung aufgefasst werden kann und die MPC im Gegensatz zu Optimalsteuerungen zu einer Regelung macht. Dies erlaubt die Berücksichtigung von Störungen.

In einer weiteren vorteilhaften Ausführungsform der Erfindung können das Prozessmodell und/oder das dynamische Maschinenmodell auf Basis von eingelesenen und an das jeweilige Modell zurückgeführten Sensordaten des ausgeführten Laserschneidprozesses kalibrierbar sein. Dies hat den Vorteil, dass das jeweilige Modell kontinuierlich verbessert werden kann, in dem es einem Update-Vorgang unterzogen werden kann. Dabei können vorzugsweise Kalman Filter eingesetzt werden.

Alternativ oder kumulativ ist es möglich, dass Abweichungen zwischen dem vom Modell berechneten (geschätzten) Werten und den real gemessenen reduziert werden durch direkte Nachregelung der entsprechenden Prozessgrößen. Wenn zum Beispiel eine Schnittspaltbreite von 200 $\mu$m erzielt werden soll, aber mittels Sensoren (zum Beispiel unter anderem mittels einer Kamera) erfasst wird, dass die Schnittspaltbreite real 180 $\mu$m beträgt, so kann automatisch eine Korrektur der 20 $\mu$m Abweichung erfolgen. Dies kann über die Fokuslage und/oder über die Anpassung des Düsenabstandes eingestellt werden. Dieser Korrekturwert wird dem vom Modell ausgegebenen Wert überlagert nachfolgender Formel:

$$\text{Focus}_{\text{SOLL, EFFEKTIV}} := \text{Focus}_{\text{SOLL}} +/- \text{Focus}_{\text{KORREKTUR, ,}}$$

wobei der Wert bzw. die Vorgabe von Focus$_{\text{SOLL}}$ vom Modell berechnet (bzw. geschätzt) wurde.

In einer weiteren vorteilhaften Ausführungsform können der erste Speicher und der zweite Speicher gemeinsam in einer einzigen elektronischen Einheit bzw. in einem gemeinsamen Bauteil integriert sein. Dies hat den Vorteil, dass die elektronische Einheit insgesamt schlanker bzw. einfacher ausgebildet sein kann. Alternativ können der erste Speicher und der zweite Speicher auch in separaten Strukturen ausgebildet sein. Dies birgt den Vorteil, dass die jeweiligen Modelle (Maschinenmodell, Prozessmodell) auch unabhängig voneinander und insbesondere während des Zugriffs auf das jeweils andere Modell geändert werden können (Modell-Update).

Üblicherweise ist es vorgesehen, dass das Prozessmodell und das Maschinenmodell als zwei separate Modelle ausgebildet sind und unabhängig voneinander nachgeregelt bzw. kalibriert werden. Alternativ oder kumulativ können das Prozessmodell und das dynamische Maschinenmodell zu einem kombinierten Modell integriert werden, so dass der Zugriff durch die Regelungseinheit in einem Schritt erfolgt. Damit kann die Performance des Verfahrens gesteigert werden.

In einer vorteilhaften weiteren Ausführungsform werden nach dem Start des Verfahrens während dessen Ausführung kontinuierlich Soll-Werte in Abhängigkeit von dem Zeitpunkt und/oder der Position auf einer Trajektorie berechnet.

In einer vorteilhaften weiteren Ausführungsform erfolgt die Regelung des Laserschneidprozesses gemeinsam und/oder in Abgleich mit der Regelung eines Vorschubes des Laserkopfes mittels des orts- und zeitaufgelösten, kombinierten Sollwertdatensatzes, wobei bei der Berechnung des orts- und zeitaufgelösten, kombinierten Sollwertdatensatzes Vorgaben des Anwenders, die z.B. über eine Benutzerschnittstelle erfasst werden können, berücksichtigt werden.

Die Vorgaben können sich zum Beispiel auf Vorgaben zur Robustheit des Schneidprozesses und/oder um Vorgaben zur Qualität des Schneidprozesses beziehen.

In einer weiteren vorteilhaften Ausführungsform können das Prozessmodell und/ oder das Maschinenmodell und/oder Update-Daten für die jeweiligen Modelle von geographisch verteilten Laserschneidanlagen zum Kalibrieren des Prozessmodells und/ oder des Maschinenmodells, insbesondere auf einem zentralen Server, gesammelt werden. Damit kann das Gesamtsystem und übergreifende Modellstrukturen verbessert werden.

Vorstehend wurde die Lösung der Aufgabe anhand des Verfahrens beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die gegenständlichen Ansprüche (die beispielsweise auf ein Laserschneidsystem oder auf eine Regelungseinheit gerichtet sind) mit den Merkmalen weitergebildet sein, die in Zusammenhang mit dem Verfahren beschrieben oder beansprucht sind. Die entsprechenden funktionalen Merkmale des Verfahrens werden dabei durch entsprechende gegenständliche Module, insbesondere durch Hardware-Module oder Mikroprozessor-Module, des Systems bzw. eines Computerproduktes ausgebildet und umgekehrt.

Gemäß einem weiteren Aspekt betrifft die Erfindung eine Regelungseinheit zur Berechnung eines orts- und zeitaufgelösten, kombinierten Sollwert-Datensatzes zur Steuerung und/oder Regelung eines Laserschneidprozesses während des Laserschneidens, insbesondere des Laserschneidens von Metallblechen oder -röhren, mit einer Laserschneidmaschine, mit:

- Einer Messdatenschnittstelle zu zumindest einem Sensor zum Messen von Sensordaten während des Schneidvorganges;
- Einer Prozessschnittstelle zu einem ersten Speicher, in dem ein Prozessmodell gespeichert ist, das den Laserschneidprozess repräsentiert und/oder modelliert und Zustandsdaten des Laserschneidprozesses und insbesondere ein daraus resultierendes Schneidergebnis schätzt;
- Einer Maschinenschnittstelle zu einem zweiten Speicher, in dem ein Maschinenmodell gespeichert ist, das das kinematische Verhalten des Laserschneidkopfes während dessen Bewegung repräsentiert und/oder modelliert und Zustandsdaten eines Bewegungsprozesses und insbesondere das daraus resultierende Schneidergebnis schätzt;
- Einem Prozessor, der zur Ausführung eines Algorithmus bestimmt ist, der das Prozessmodell und das Maschinenmodell koppelt, insbesondere über einen Vorschubwert und/oder über einen Düsenabstandswert koppelt;
- wobei der Prozessor weiterhin dazu bestimmt ist, über die Prozessschnittstelle auf das Prozessmodell in dem ersten Speicher und über die Maschinenschnittstelle auf das Maschinenmodell in dem zweiten Speicher zuzugreifen, um auf Basis der geschätzten Zustandsdaten des Laserschneidprozesses und des Bewegungsprozesses den orts- und zeitaufgelösten, kombinierten Sollwertdatensatz mit aufeinander abgestimmten Sollwerten für den Laserschneidprozess und Sollwerten für den Bewegungsprozess unter Berücksichtigung der eingelesenen Sensordaten zu berechnen.

In einer bevorzugten Ausführungsform kann der zumindest eine Sensor folgendermaßen ausgebildet sein, insbesondere als:

- eine Kamera,
- ein spektraler Intensitätssensor,
- ein Gasdrucksensor,
- ein Gasflusssensor,
- ein Sensor zur Erfassung der Laserleistung,
- ein Sensor zur Erfassung einer Strahlform des Lasers,
- Sensoren für mechanische Subsysteme, insbesondere einem Sensor zur Erfassung einer Fokuslage, einer Schnittgeschwindigkeit, eines Düsenabstandes,
- Beschleunigungssensoren, insbesondere für den Schneidkopf, Blech und/oder Maschinenachsen,
- Temperaturfühler zur Erfassung der Temperatur des Schneidgases, einer Schneidumgebung, eines zu schneidenden Werkstücks, der Antriebe,
- Feuchtigkeitssensoren zur Erfassung der Feuchtigkeit des Schneidgases und/oder einer Umgebung, Sensoren zur Erfassung einer Temperaturverteilung der Schmelze und/oder

- akustische Sensoren zur Messung von akustischen Emissionen während des Schneidens.

In einer bevorzugten Ausführungsform kann eine Auswahl der Sensoren oder eine Kombination der vorgenannten Sensortypen vorgenommen werden. Die Auswahl kann insbesondere nach Verfügbarkeit der Sensoren und/oder nach dem Nutzen für die Sollwertberechnung ausgeführt werden.

In einem weiteren Aspekt bezieht sich die Erfindung auf ein Laserschneidsystem, insbesondere zum Schneiden von Metallblechen oder -röhren, mit:

- Einer Regelungseinheit zur Berechnung eines orts- und zeitaufgelösten, kombinierten Sollwertdatensatzes zur Steuerung und/oder Regelung eines Laserschneidprozesses wie vorstehend beschrieben und
- Einer Laserschneidmaschine mit einem beweglichen Laserschneidkopf, der mittels Aktoren und/oder Antrieben entlang einer Trajektorie gemäß dem von der Regelungseinheit berechneten Sollwertdatensatz bewegt und betrieben wird.

In einer bevorzugten Ausführungsform kann das Laserschneidsystem eine Benutzerschnittstelle umfassen. Über die Benutzerschnittstelle können beispielsweise Vorgaben zur erforderlichen Schneidqualität und/oder zur gewünschten Schneidgeschwindigkeit erfasst werden, die bei der Berechnung des orts- und zeitaufgelösten, kombinierten Sollwertdatensatzes und damit bei der Regelung des Laserschneidprozesses berücksichtigt werden.

Das Verfahren ist vorzugsweise Computer-implementiert. Alle oder ausgewählte Verfahrensschritte können durch ein Computerprogramm auf einer Computereinheit mit einem Prozessor (CPU, GPU etc.) ausgeführt werden. Das Messen von Sensordaten kann über geeignete Sensoren unterschiedlicher Art (optisch, akustisch und/oder andere Sensorarten) ausgeführt werden. Je nach Typ der gemessenen Signale, kann ein A/D-Wandler zum Einsatz kommen, um die analogen Signale in digitale Signale umzuwandeln. Das Messen von Sensordaten kann somit auch ein einlesen von digitalen Signalen umfassen.

Eine weitere Aufgabenlösung sieht ein Computerprogramm vor, mit Computerprogrammcode zur Durchführung aller Verfahrensschritte des oben näher beschriebenen Verfahrens, wenn das Computerprogramm auf einem Computer ausgeführt wird. Dabei ist es auch möglich, dass das Computerprogramm auf einem von einem Computer lesbaren Medium gespeichert ist.

**Kurze Beschreibung der Figuren:**

FIG.1 zeigt eine schematische Darstellung von drei Kostenfunktionen, die auf einer spezifisch ausgelegten Schaltfläche einer Benutzeroberfläche gemäß einer bevorzugten Ausführungsform der Erfindung eingegeben werden können;

FIG. 2 ist eine übersichtsartige Darstellung eines Laserschneidsystems zum Schneiden von Metallblechen und -röhren in Form eines Blockdiagramm, das mit einer erfindungsgemäßen Regelungseinheit und mit extern vorgehaltenen Modellen geregelt wird gemäß einer bevorzugten Ausführungsform der Erfindung;

FIG.3 ist ebenfalls eine schematische Darstellung des Laserschneidsystems, das mit der Regelungseinheit und mit einem intern vorgehaltenen integrierten Modell gemäß einer anderen vorteilhaften Ausführungsform der Erfindung geregelt wird;

FIG.4 zeigt eine beispielhafte Darstellung einer Schnittkontur mit unterschiedlichen Radien und Trajektorie-Abschnitten, für die jeweils unterschiedliche Sollwertdatensätze dynamisch berechnet werden und, die entsprechend mit unterschiedlichen Sollwertdatensätzen abgefahren werden;

FIG.5 ist eine schematische Darstellung eines Laserschneidsystems zum Schneiden von Metallblechen und -röhren, bei dem eine Prozessoreinheit zur Reduktion von Modellabweichungen verwendet wird mit einem langsamen Regelkreis und optional einem schnellen Regelkreis;

FIG. 6 zeigt eine weitere schematische Darstellung eines Laserschneidsystems zum Schneiden von Metallblechen und -röhren, bei dem die Prozessoreinheit zur Reduktion von Modellabweichungen verwendet wird mit einem schnellen Regelkreis;

FIG. 7 ist ein Ablaufdiagramm des Verfahrens zum Regeln des Laserschneidprozesses gemäß einer ersten und einer alternativen Ausführungsform der Erfindung.

FIG. 8 eine schematische Übersichtsfigur über das Laserschneidsystem gemäß einer bevorzugten Ausführungsform der Erfindung.

**Beschreibung von vorteilhaften Ausführungsformen in Zusammenhang mit den Figuren**

Die Erfindung betrifft unter anderem ein Verfahren zum Berechnen eines orts- und zeitaufgelösten, kombinierten Sollwert-Datensatzes zur Steuerung und/oder Regelung eines Laserschneidprozesses während des Laserschneidens mit einer Laserschneidmaschine L. Der Laserschneidprozess ist durch unterschiedliche Größen charakterisiert. Es können unterschiedliche Zielvorgaben zur Ausführung des Laserschneidprozesses vorgegeben werden. So kann zum Beispiel vorgegeben werden, dass die Effizienz bzw. Produktivität des Schneidens möglichst maximiert werden soll. Dies bedeutet, dass so viele Teile wie möglich in einer Zeiteinheit aus dem Werkstück geschnitten werden sollen. Eine andere Zielvorgabe kann zum Beispiel die Maximierung der Qualität sein. Eine weitere Zielvorgabe kann zum Beispiel die Robustheit des Schneidprozesses betreffen.

In der folgenden Figurenbeschreibung wird mit dem Bezugszeichen L die Laserschneidmaschine gekennzeichnet. Diese umfasst einen Laser mit einem Laserschneidkopf, der über bekannte mechatronische Komponenten (z.B. eine Brücke) beweget und betrieben wird.

Die Erfindung basiert auf der Anwendung von zwei Modellen bzw. deren Kombination.

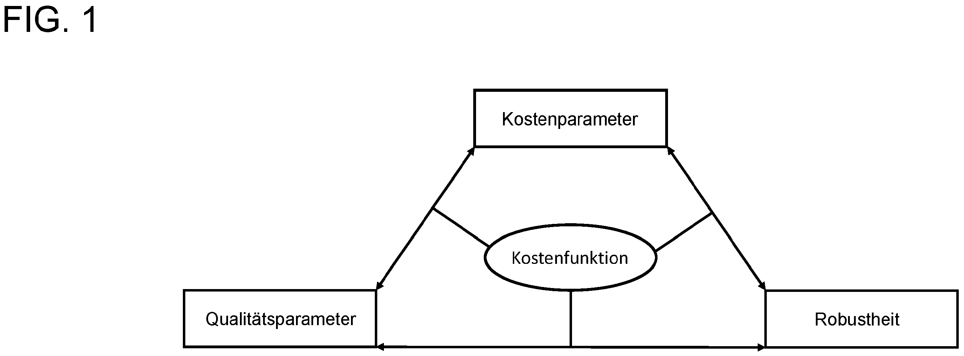

1. Prozessmodell PM: Das Prozessmodell schätzt die resultierende Qualität (z.B. Grat) des geschnittenen Teils T. Der Optimierer findet Prozessparameter, die den Qualitätsanforderungen genügen. Das Prozess- und Maschinenmodell sind direkt miteinander verknüpft (z.B. über den Vorschub (Schnittgeschwindigkeit) und den Düsenabstand). Das Prozessmodell wird verwendet, um die Qualität eines geschnittenen Teils T zu schätzen. Basierend auf der Schätzung werden die Schneidparameter optimal eingestellt. Das Gütekriterium der Optimierung (Kostenfunktion) kann zwischen Robustheit, Produktivität und Qualität verschieden gewichtet werden (siehe Figur 1 unten). Im Gegensatz zu anderen Methoden, welche auch optimale Prozessparameter (z.B. mittels AI, Modell) aber nur insgesamt für ein gesamtes Teil finden, sind die Prozessparameter gemäß dem vorliegenden Vorschlag lokal optimal, d.h. im Millisekunden Takt verfügbar. (Kopplung zwischen Prozessmodell und Maschinenmodell). Im Stand der Technik waren die optimalen Prozessparameter nur generisch und einheitlich für den Schneidprozess eines zu schneidenden Teils verfügbar und es können nicht unterschiedlich optimierte Prozessparameter für ein und dasselbe Teil berechnet werden. Dies ist mit der vorliegenden Erfindung jedoch möglich.

2. Maschinenmodell MM: Eine hochdynamische Bewegung kann hohe Konturfehler verursachen, die mit Hilfe eines dynamischen Maschinenmodells geschätzt und kompensiert werden können. Alternativ wird die Dynamik reduziert, um Toleranzanforderungen zu erfüllen. Das Maschinenmodell schätzt Konturfehler, welche aus der Trägheit bzw. Nachgiebigkeit der Maschinenkomponenten resultieren. Besonders ausgeprägt sind Konturfehler, wenn zum Beispiel hohe dynamische Limits verwendet werden. Basierend auf dieser Schätzung können entweder die Konturfehler reduziert werden, oder die Produktivität (durch höhere dynamische Limits) gesteigert werden. Durch die Konturfehlerschätzung mittels Maschinemodell

◦ hat man die Information während dem Schneiden, ob die Bauteiltoleranzen eingehalten werden

◦ können Konturfehler reduziert werden und

◦ es können höhere dynamische Limits (Produktivitätssteigerung) verwendet werden, weil die höheren Konturfehler kompensiert werden können.

Der Vorschub (Sollgeschwindigkeit) kann zum Beispiel in Ecken nicht erreicht werden (dynamische Limits der Maschine), weshalb die optimalen Parameter für das zu schneidende Teil nicht in der Ecke gelten. Dazu wird das Prozessmodell PM verwendet, um auf die Änderung der Geschwindigkeit zu reagieren. Vorteilhafterweise kann bei dieser Regelung ein MPC Ansatz verfolgt werden, der auf Schätzungsberechnungen basiert und somit schon im Voraus (Prädiktionshorizont) auf Geschwindigkeitsreduktionen - oder allgemeiner: Geschwindigkeitsänderungen - reagieren kann. Falls nur (wie im Stand der Technik) auf die aktuell vorhandene Geschwindigkeit reagiert werden kann, ist dies mit folgenden Nachteilen verbunden: Die verschiedenen Delays der Fokuslage, Geschwindigkeit, Gasdruck, Laserleistung sowie Pulsschema Düsenabstand, BPP (beam parameter product) und Fokusdurchmesser (Magnifikation) können ggf. unzureichend kompensiert werden. Zum Beispiel kann die Anpassung der Fokuslage aufgrund einer raschen Geschwindigkeitsreduktion zu wenig schnell gemacht werden (Dynamik der Fokuslage ist geringer als von den Maschinenachsen welche die Schneidgeschwindigkeit vorgeben). Die vorstehend genannten Abweichungen vom SOLL werden erfindungsgemäß indiziert (vorhergesagt) und es können somit im Vorfeld Änderungen an den Einstellungen getriggert werden, damit diese Abweichungen nicht entstehen.

Ein vorteilhafter Effekt ist unter anderem darin zu sehen, dass die Sensorrückmeldung in die Sollwertberechnung einer Regelungseinheit, insbesondere eines MPC-Reglers, integriert ist. Alternativ oder kumulativ von Schätzungen von Prozessmodellzuständen kann die Berechnung sich somit auf gemessene Werte stützen. Im Vergleich zu Open-Loop-Methoden des MPC-Reglers (ohne und mit Modellaktualisierung) sind höhere Modellabweichungen beherrschbar.

Die Modelle PM, MM können im kompletten Maschinenlebenszyklus angewendet werden. Die Verfolgung der Modellabweichungen trägt zur vorausschauenden Wartung bei.

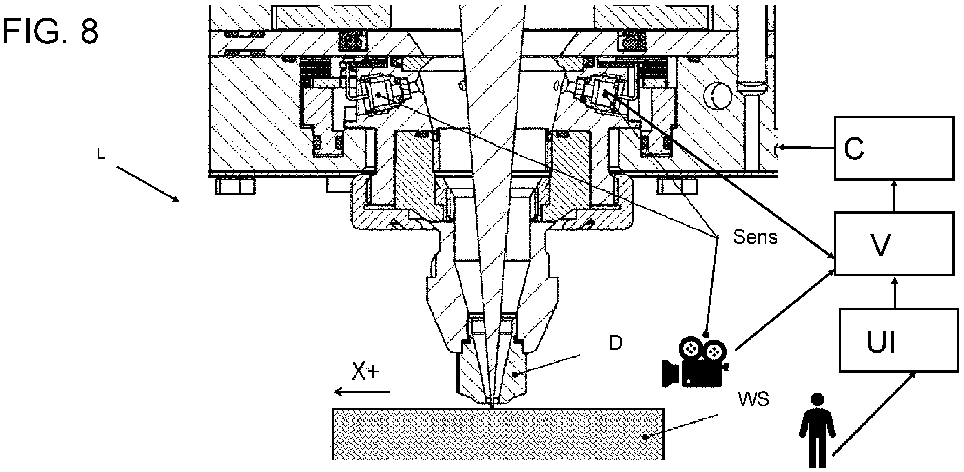

**Fig. 8** zeigt in einer schematischen Darstellung einen Laserschneidkopf mit einer Düse D einer Laserschneidmaschine L, die von einem Controller C angesteuert oder geregelt wird (durch den Pfeil gekennzeichnet), um ein Werkstück WS zu schneiden. Wie ersichtlich, umfasst der Laserschneidkopf eine Vielzahl von mechanischen bzw. mechatronischen und/oder physikalischen Komponenten, die auf die Gesamtmasse Einfluss nehmen und erfindungsgemäß bei der Bewegung (z.B. hier - in der Figur gekennzeichnet mit - Richtung X+) berücksichtigt werden. Die Sensoren Sens können innerhalb der Laseranlage und/oder außerhalb davon angeordnet sein und liefern Sensordaten zur weiteren Berechnung. Die Sensordaten können z.B. wie in Fig. 8 gezeigt, über einen Vermittlungsknoten V in einem Datennetzwerk an den Controller C übermittelt werden. Zusätzlich kann ein Userinterface UI bereitgestellt werden, auf dem der Anwender Eingaben, insbesondere zur Kostenfunktion (s. Fig. 1) tätigen kann. Wie in Fig. 8 übersichtsartig gezeigt, kann in eine Maschinensteuerung der Laserschneidmaschine L eine Regelungseinheit RE und/oder ein Prozessor P implementiert sein, die z.B. als zweistufiger prädiktiver Regler realisiert sein kann. «Zweistufig» bezieht sich auf die Implementierung eines schnellen Regelkreises srk (fast control loop) und eines langsamen Regelkreises lrk (slow control loop) aufgeteilt. «Prädiktiv» da die Berechnung vorausschauend und somit prädiktiv erfolgt. Diese Lösung reduziert den Rechenaufwand sowie die Anfälligkeit auf Modellierungsfehler. Die Regelungseinheit RE kann auf dem Controller C implementiert sein.

Der langsame Regelkreis ermittelt die Sollwerte so, dass das Prozessresultat bezogen auf die gewünschten Anforderungen optimal ist. Dabei erhält dieser Regelkreis Informationen, inwiefern die Modelle (Prozessmodell PM und Maschinenmodell MM) den aktuellen Bedingungen angepasst werden müssen.

Der schnelle Regelkreis verändert schnell veränderbare Sollwerte dahingehend, dass das anhand von Messgrössen geschätzte und/oder direkt gemessene Prozessresultat/Prozessgrösse möglichst nahe am gewünschten Prozessresultat/Prozessgrösse ist. Dabei wird ebenfalls auf das Prozessmodell PM und/oder das Maschinenmodell MM zurückgegriffen.

Das Prozessmodell PM und/oder das Maschinenmodell MM können über einen Vergleich von Mess- und Schätzgrössen aktualisiert werden (z.B. Kalman-Filter).

**Fig. 1** zeigt unterschiedliche Kostenfunktionsblöcke (in diesem Beispiel 3, es können aber auch noch mehr Parameter bzw. Blöcke bestimmt und berücksichtigt werden), die bestimmt werden, in Abhängigkeit von den gewählten Zielvorgaben. Die Zielvorgaben können vorzugsweise auf einer Benutzeroberfläche UI in einem spezifisch gestalteten Schaltfeld eingegeben werden. Wie in Fig. 1 gezeigt, weisen die unterschiedlichen Zielvorgaben Abhängigkeiten voneinander auf. So ist es für den Fachmann beispielsweise offensichtlich, dass mit einer Zielvorgabe zur Maximierung der Qualität in der Regel auch eine Verringerung der Produktivität verbunden ist und/oder zu einem höheren Gasverbrauch führen kann. Die Schaltfläche der Benutzeroberfläche ist deshalb so ausgebildet, dass die Eingabe von inkonsistenten Eingaben ausgeschlossen oder weitestgehend vermieden werden kann, z.B. in Form von mehreren Schiebereglern, wobei bei Änderung eines Schiebereglers automatisch die beiden oder die mehreren anderen Regler entsprechend mitgeändert werden.

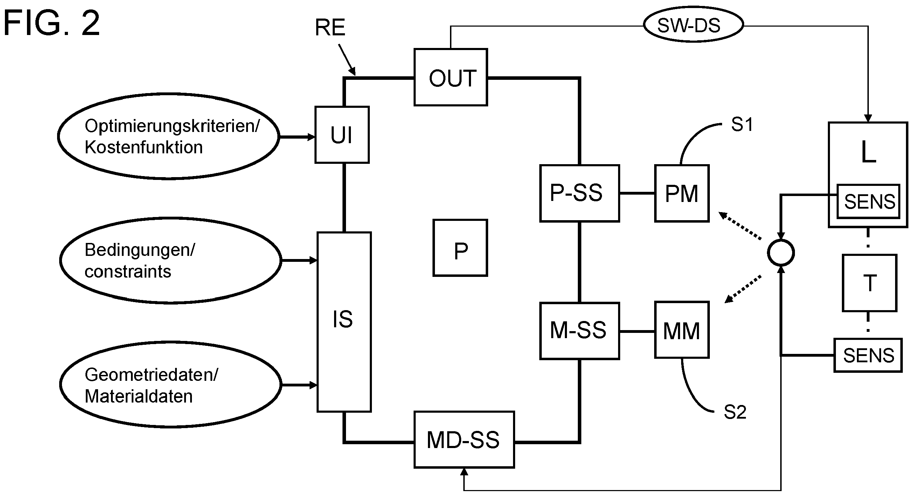

In **Fig. 2** ist ein Blockdiagramm dargestellt, das eine Übersicht über das erfindungsgemäße Laserschneidsystem in unterschiedlichen Ausführungsvarianten zeigt.

Eine Regelungseinheit RE dient zur Berechnung des orts - und zeitaufgelösten, kombinierten Sollwert - Datensatzes SW-DS. Die Regelungseinheit RE ist vorzugsweise auf einer Computereinheit, wie zum Beispiel einer Workstation oder einem Server oder einem an die Laserschneidmaschine L angeschlossenen elektronischen Rechnermodul (z.B. als embedded device) implementiert. Wie in dem Beispiel in Figur 2 gezeigt, können der Regelungseinheit RE unterschiedliche Eingangsgrößen zur Berechnung des Sollwertdatensatzes SW-DS zugeführt werden. Zumindest werden Optimierungskriterien als Eingangsgrößen erfasst, die zum Beispiel auf der Benutzeroberfläche UI, die vorstehend im Zusammenhang mit Figur 1 näher erläutert worden ist, eingegeben worden sind. Des Weiteren können weitere Bedingungen (constraints) für die Berechnung Sollwertdatensatzes SW-DS sowie Angaben zur Geometrie des zu schneidenden Bauteils bzw. zum Schneidplan über eine Eingangsschnittstelle IS eingelesen werden.

Auch kann im Rahmen der constraints z.B. konfiguriert werden, welche Toleranzen der Schnittkontur noch akzeptabel sind.

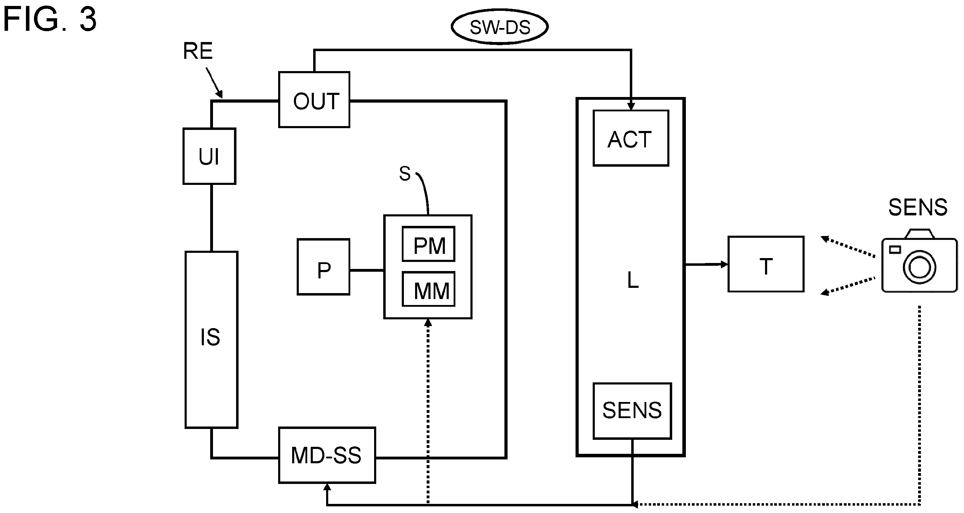

Die Regelungseinheit RE kann einen Prozessor P umfassen, auf dem ein Algorithmus ausgeführt werden kann zur Berechnung des Sollwertdatensatzes SW-DS. Dazu kann der Algorithmus über eine Prozessor Schnittstelle P-SS auf ein Prozessmodell PM zugreifen, das in einem ersten Speicher S1 gespeichert ist und über eine Maschinenschnittstelle M-SS auf ein Maschinenmodell MM zugreifen, das in einem zweiten Speicher S2 gespeichert ist. In dem in Figur 2 dargestellten Ausführungsbeispiel sind die beiden Modelle PM, MM als separate Modelle vorgehalten und als externe Instanzen außerhalb der Regelungseinheit RE in den Speichern S1, S2 gespeichert. In anderen Ausführungsformen können die beiden Modelle PM, MM auch intern und innerhalb der Regelungseinheit RE vorgehalten und gespeichert sein (zum Beispiel in dem in Figur 3 gezeigten Ausführungsbeispiel). Der Algorithmus ist dazu ausgebildet, mit den erfassten Eingangsdaten (insbesondere den Optimierungskriterien, den erfassten *constraints* und den Angaben zur Schnittgeometrie) auf kombinierte Weise auf die beiden Modelle PM und MM zuzugreifen, um für den jeweiligen Anwendungsfall einen orts - und zeitaufgelösten, kombinierten Sollwertdatensatz SW- DS zu berechnen. Der Einfachheit halber wird im Folgenden der orts- und zeitaufgelöste, kombinierte Sollwertdatensatz SW - DS auch einfach mit "Sollwertdatensatz SW-DS" abgekürzt. Der so berechnete Sollwertdatensatz SW -DS kann über eine Ausgangsschnittstelle OUT direkt an den Laserschneidmaschine L zu Einstellung und/oder Regelung von ausgewählten Aktuatoren ACT (zur Ansteuerung und/oder Einstellung der jeweiligen mechatronischen Komponenten der Laserschneidmaschine L) übermittelt werden. Die Laserschneidmaschine L wird dann mit den berechneten Daten des Sollwertdatensatzes SW-DS betrieben. Dabei werden über unterschiedliche Typen von Sensoren SENS Sensordaten erfasst, die zum Zwecke der Verbesserung wieder an die Regelungseinheit RE zurückgeführt werden können. Bei den Sensoren kann es sich um optische (Kamera, Fotodiode etc.) und/oder akustische Sensoren und/oder Temperatursensoren und/oder weitere Sensoren SENS zur Erfassung eines kinematischen und/oder laserschneidphysikalischen Zustandes handeln. Die Sensoren können unmittelbar in der Laserschneidmaschine L verbaut sein; sie können allerdings auch als externe und/oder als mobile Instanz eingesetzt werden, um beispielsweise eine Schnittkante eines geschnittenen Werkstücks T zu erfassen.

Wie in Figur 2 durch die gepunkteten zwei Linien gekennzeichnet, können die erfassten Sensordaten der Sensoren SENS - ausgehend von der Laserschneidmaschine L über einen in Figur 2 nicht näher bezeichneten Vermittlerknoten (der Kreis repräsentiert eine Recheneinheit, die der Laserschneidmaschine L zugeordnet ist oder auf ihr implementiert sein kann) zu den beiden Modelle PM, MM - auch unmittelbar an das Prozessmodell PM und/oder an das Maschinenmodell MM zur kontinuierlichen Qualitätsverbesserung der Modelle weitergeleitet werden. Diese Rückkopplung ist allerdings nur optional.

In **Figur 3** ist ein weiteres Ausführungseispiel der Regelungseinheit RE dargestellt, bei dem die beiden Modelle, das Prozessmodell PM und das Maschinenmodell MM gemeinsam in einem Speicher S gespeichert und vorgehalten sind. Der Algorithmus muss somit nur einmal auf den Speicher S zugreifen, um ein einziges Modell, eine Kombination des Prozessmodells PM und des Maschinenmodells MM anzusprechen. Wie bereits bei dem Ausführungsbeispiel von Figur 2 näher erläutert, kann die Laserschneidmaschine L Sensoren SENS umfassen oder auch externe Sensoren können ausgebildet sein, um das Schneidergebnis am geschnittenen Bauteil T zu erfassen. Die so erfassten Sensordaten werden dann an die Regelungseinheit RE zurückgeführt.

In einer ersten Variante werden die zurückgeführten Sensordaten in der Regelungseinheit RE verwendet, um etwaige Abweichungen zwischen den mit dem Modell PM, MM geschätzten Werten und den real gemessenen Werten zu reduzieren. Bei den Werten kann es sich zum Beispiel um unterschiedliche Prozessparameter handeln, wie zum Beispiel eine Schnittspaltbreite, eine Schlackentemperatur, eine Schnittfrontneigung, eine Austragungsgeschwindigkeit und/oder eine Temperaturverteilung der Schmelze, ein Qualitätsmaß (z.B. Kantenrauhigkeit), eine Strahlqualität, ein effektiver Absorptionsgrad, Angaben zum Strahlwerkzeug (Größe, Fokuspunkt, Fokuslage) und/oder Werte zum dynamischen Zustand des mechanischen Systems (Masse, Größe, Geschwindigkeit, Beschleunigung, Ruck,...).

In einer zweiten Variante können die zurückgeführten Sensordaten in der Regelungseinheit RE verwendet werden, um das Prozessmodell PM und/oder das Maschinenmodell MM zu optimieren bzw. zu kalibrieren.

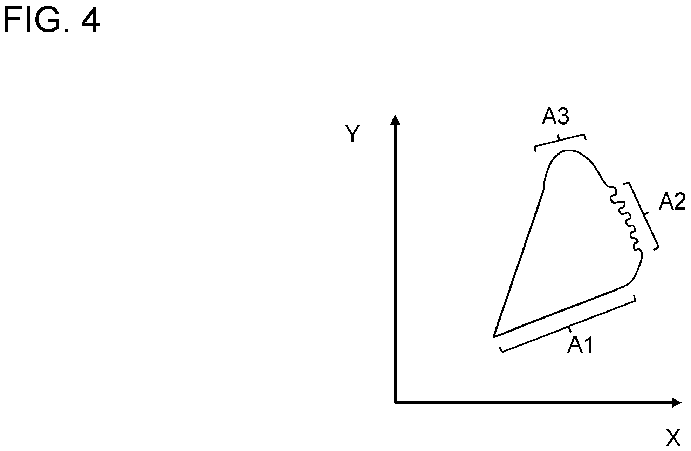

**Figur 4** zeigt ein Beispiel eines Umrisses für ein zu schneidendes Bauteil T mit den Dimensionen in der X-Achse und Y-Achse. Wie an diesem Beispiel ersichtlich, weist die zu schneidende Kontur gerade Strecken und unterschiedliche Abschnitte mit unterschiedlichen kleineren und größeren Radien auf. Diese Geometrie kann erfindungsgemäß mit unterschiedlichen Sollwertdatensätzen SW - DS abgefahren werden, die an den jeweiligen Geometrieabschnitt angepasst sind. Die in Figur 4 dargestellte Geometrie weist zum Beispiel einen ersten Abschnitt A1 auf, der einen relativ langen Geradeaus-Schnitt umfasst, einen zweiten Abschnitt A2 mit einer Sequenz von kleinen Radien und einen dritten Abschnitt A3 mit einem großen Radius. Der Aktuator ACT für den Schneidkopf kann auf dem ersten Abschnitt A1 mit einem höheren Vorschub bewegt werden als beispielsweise auf dem Abschnitt A2, da er für die Einhaltung der vorgegebenen Qualitätsstandards hier langsamer bewegt werden muss, um die kleinen Radien in ausreichender Qualität schneiden zu können. Erfindungsgemäß werden also je nach Zeitpunkt, an dem sich der Schneidkopf auf einem Punkt der Geometrie befindet, unterschiedliche Sollwertdatensätze SW-DS berechnet und zur Steuerung der Aktuatoren für den Schneidkopf und ggf. weiteren Komponenten der Laserschneidmaschine L verwendet. Um bei dem vorstehend genannten Beispiel zu bleiben, wird erfindungsgemäß für den ersten Abschnitt A1 ein erster Sollwertdatensatz SW-DS1, für den zweiten Abschnitt A2 ein zweiter Sollwertdatensatz SW-DS2 und für den dritten Abschnitt A3 ein dritter Sollwertdatensatz SW-DS3 berechnet. Auch wenn in der vorstehenden Beschreibung von "Abschnitten" die Rede ist, so kann der Sollwertdatensatz erfindungsgemäß für jeden einzelnen Punkt der Trajektorie ermittelt werden. Der so berechnete Sollwertdatensatz SW-DS ist deshalb orts - und zeitaufgelöst und wird für die Trajektorie dynamisch ermittelt.

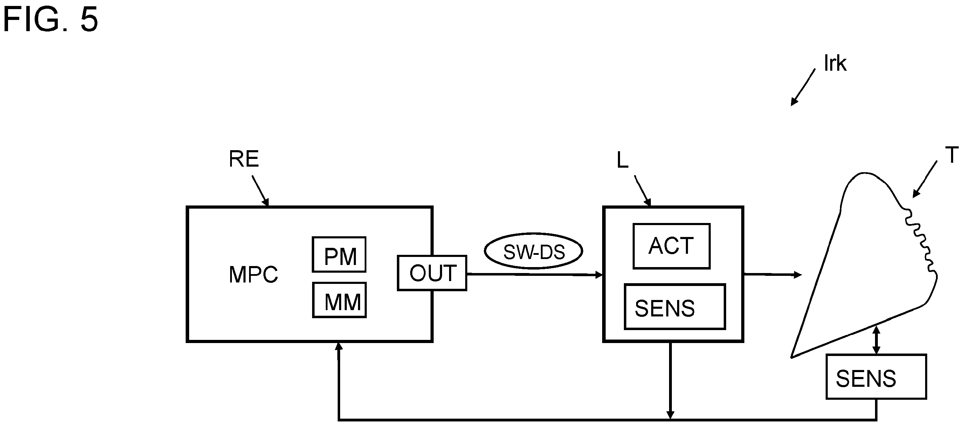

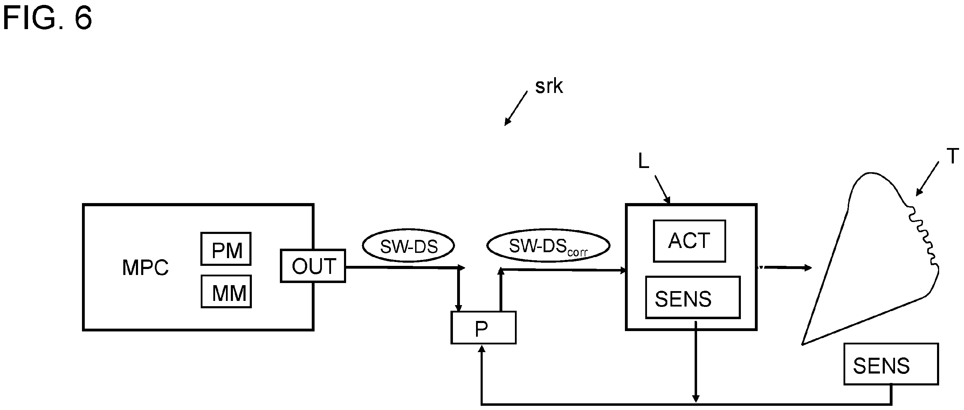

In **Figur 5** ist eine Ausführungsform der Erfindung gezeigt, die auf einem langsamen Regelkreis lrk basiert. Der langsame Regelkreis lrk kennzeichnet sich dadurch, dass Sensordaten, die beispielsweise von Sensoren SENS an der Laserschneidmaschine L und/oder im Zusammenhang mit dem geschnittenen Bauteil T erfasst worden sind, verwendet werden, um die Modelle, insbesondere das Prozessmodell PM und das Maschinenmodell MM einem Update-Vorgang zu unterziehen. Die Laserschneidmaschine L wird durch zumindest einen Controller gesteuert oder geregelt. Der Controller erhält den Sollwertdatensatz zur Ansteuerung des Schneidprozesses. Da die Verbesserung der Modelle sehr rechenintensiv ist, ist es wichtig, sicherzustellen, dass für diesen Vorgang ausreichende Ressourcen (Rechenressourcen und Zeit) zur Verfügung stehen. In einer bevorzugten Ausführungsform kann die Regelungseinheit RE einen prädiktiven, modellbasierten Regler umfassen (MPC-Regler, model predictive control). Hier werden die Sensordaten, die auf der Laserschneidmaschine L und/oder in Bezug auf das geschnittenen Bauteil T erfasst werden somit an die Regelungseinheit RE zurückgeführt (langsamer Regelkreis). Zusätzlich kann optional noch ein schneller Regelkreis ausgebildet sein, der ausführlicher nachfolgend in Zusammenhang mit Figur 6 erläutert wird.

**Figur 6** zeigt in einer weiteren Schemazeichnung den schnellen Regelkreis srk. Bei dem schnellen Regelkreis srk ist der Prozessor P oder eine weitere Recheninstanz ausgebildet, der/die sich außerhalb der Regelungseinheit RE befinden kann und dazu dient, etwaige Abweichungen zwischen den geschätzten Modellberechnungen und der Realität (mit den gemessenen Werten) zu reduzieren. Wenn beispielsweise die Modellschätzung eine Schnittspaltbreite von 150 $\mu$m vorgibt und die Sensordaten aber eine reale Schnittspaltbreite von 170 $\mu$m erfassen, so kann der Prozessor P mittels eines Algorithmus angesteuert werden, ausgewählte Aktoren ACT zu aktivieren, um beispielsweise die Fokuslage zu verändern. Dies hat zur Folge, dass die Schnittspaltbreite besser vorhergesagt werden kann. In Figur 6 ist der vom Modell berechnete Sollwertdatensatz mit dem Bezugszeichen SW - DS gekennzeichnet und der durch den Prozessor P korrigierte Sollwertdatensatz dem Bezugszeichen SW-DS$_{CORR}$.

Grundsätzlich kann das Maschinenmodell MM und/oder das Prozessmodell PM ein Zustandsraummodell (state-space model), insbesondere ein lineares Zustandsraummodell, sein. Die Zustandsraumdarstellung ist eine von mehreren Beschreibungen eines dynamischen Systems. Das Zustandsraummodell gilt als ingenieurtechnisch geeignete Methode der Analyse und Synthese dynamischer Systeme im Zeitbereich und ist besonders effizient bei der regelungstechnischen Behandlung von Mehrgrößensystemen, linearen oder nichtlinearen und zeitvariablen Übertragungssystemen. Dabei werden sämtliche Beziehungen der der Eingangs-, Ausgangs- und Zustandsgrößen in Form von Matrizen und Vektoren dargestellt. Das Zustandsraummodell wird durch zwei Gleichungen beschrieben, die Zustandsdifferenzialgleichung erster Ordnung und die Ausgangsgleichung. Für weitere Informationen sei auf den Eintrag https://en.wikipedia.org/wiki/State-space representation verwiesen.

Im Folgenden wird die Anwendung des schnellen und langsamen Regelkreises srk, lrk mit einem Modellupdate anhand von Beispielen beschrieben.

Wenn beispielsweise die Abrisswahrscheinlichkeit falsch geschätzt wurde, so kann in dem schnellen Regelkreis srk eine Detektion des (realen) Abrissverhaltens durch Fotodioden erfasst werden und die Schnittgeschwindigkeit kann daraufhin reduziert werden. Alternativ oder kumulativ kann der langsame Regelkreis lrk zur Anwendung kommen. Abweichende Materialeigenschaften, Verschmutzung, Alterung oder Abweichungen in der Produktion der Maschine führen zu einer tieferen oder höheren möglichen Schnittgeschwindigkeit. Diese Abweichung wird für folgende Schnitte berücksichtigt; die Schnittgeschwindigkeit wird modellintern reduziert/erhöht.

Wenn beispielsweise die Konturfehler tatsächlich höher sind als geschätzt, dann kann der langsame Regelkreis lrk zur Anwendung kommen. Mit Hilfe des Beschleunigungssensors kann man den Konturfehler des geschnittenen Teils besser schätzen. Die Reduktion der Maschinenmodellabweichung durch Anpassung der Beschleunigung oder des Rucks erfolgt etwas zeitverzögert. Die Gleichungen des Maschinenmodells werden angepasst. Routinen zur Kalibrierung des Modells können angewendet werden (Modell Update). Bei einem Modell Update eines linearen State-Space Modells (siehe oben, Zustandsraummodell) würde man beispielsweise die Matrizen A, B und D anpassen, wobei die Matrix A die Systemmatrix oder Zustandsmatrix (mit den Koeffizienten der Zustandsvariablen), Matrix B die Eingangsmatrix und Matrix D die Durchgangsmatrix oder Feed Forward Matrix ist.

Wenn die Schnittspaltbreite falsch geschätzt wurde, kann der langsame Regelkreis lrk zur Anwendung kommen. Die effektive Schnittspaltbreite wird durch die Kamerabilder berechnet. Es kann ein Korrekturwert für die Fokuslage berechnet werden, um die gewünschte Schnittspaltbreite zu erhalten. Abweichungen in der Produktion der Maschine führen zu leicht anderen effektiven Fokuslagen (bei gleichen Einstellungen). Weiter wirken Effekte wie thermischer Fokus-Shift direkt auf die effektive Fokuslage, welche die Schnittspaltbreite wesentlich bestimmt. Thermischer Fokus-Shift ist beispielsweise abhängig von der Verschmutzung der optischen Komponenten. Diese Abweichung wird erfindungsgemäß im Prozessmodell PM berücksichtigt und ein Offsetwert (SW-DS$_{CORR}$) für die Fokuslage wird berechnet und eingestellt.

Sollte beispielsweise die Grathöhe falsch geschätzt werden, kann ebenfalls der langsame Regelkreis lrk zur Anwendung kommen. Mit Hilfe von AI, Deep Learning, Kalman Filter kann die effektive Grathöhe bestimmt werden. Es werden Korrekturwerte (SW-DS$_{CORR}$) für die Fokuslage und den Gasdruck berechnet, um die gewünschte Grathöhe zu erreichen.

Wenn beispielsweise der Schnittfrontwinkel (inclination angle) falsch geschätzt wurde, kann der langsame Regelkreis lrk zur Anwendung kommen. Mit Hilfe der Kamerabilder kann der Schnittfrontwinkel bestimmt werden. Ein Korrekturwert (SW-DS$_{CORR}$) für den Schnittfrontwinkel wird im Modell angepasst.

Wenn beispielsweise die Temperatur(verteilung) falsch geschätzt wurde, kann der langsame Regelkreis lrk zur Anwendung kommen. Mittels Kamera wird die Temperaturverteilung gemessen. Ist diese zu hoch, wird die Laserleistung reduziert. Ist die Temperatur zu klein, wird die Geschwindigkeit reduziert. Es können auch Korrekturen der Fokuslage oder des Gasdrucks vorgenommen werden. Produktionsbedingte Abweichungen des Lasers führen zu unterschiedlichen Laserintensitätsprofilen und entsprechend zu verschiedenen Temperaturverteilungen. Die Temperatur(verteilung) wird im Modell über einen Korrekturfaktor angepasst.

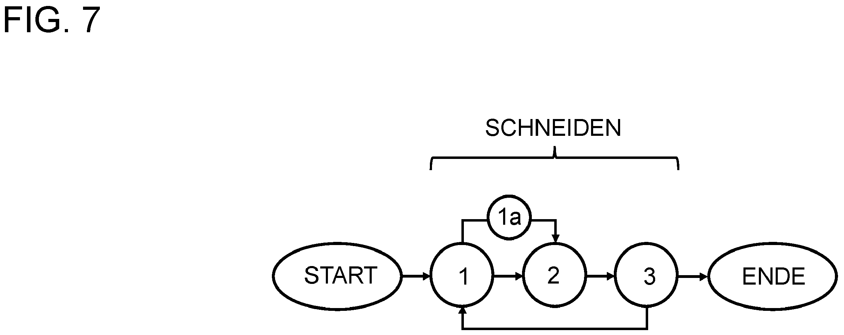

**Fig. 7** zeigt ein Ablaufdiagramm des Verfahrens zur Steuerung und / oder Regelung des Laserschneidverfahrens über dynamisch berechnete Sollwertdatensätze SW-DS. Während des Laserschneidvorganges werden in Schritt 1 über geeignete Sensoren SENS Sensordaten erfasst, vorverarbeitet und ggf. einem A/D Wandler zugeführt und als digitaler Datensatz zur Berechnung des Sollwertdatensatzes SW-DS verarbeitet. In Schritt 1a, der optional ist, können Zielvorgaben auf einer Benutzeroberfläche UI eingegeben werden (z.B. zu erreichende Schnittqualität und/oder Schnittperformance). Diese Vorgabe und/oder ggf. weitere "constraints" werden dann bei der späteren Berechnung des Sollwertdatensatzes SW-DS berücksichtigt. In Schritt 2 wird auf ein kombiniertes Maschinenmodell MM und Prozessmodell PM zugegriffen, um auf Basis der geschätzten Zustandsdaten des Laserschneidprozesses und des Bewegungsprozesses den orts- und zeitaufgelösten, kombinierten Sollwertdatensatz SW-DS mit aufeinander abgestimmten Sollwerten für den Laserschneidprozess und Sollwerten für den Bewegungsprozess unter Berücksichtigung der eingelesenen Sensordaten in Schritt 3 zu berechnen. Nach Abschluss des Schneidvorganges kann das Verfahren beendet werden. Während des Schneidvorganges werden kontinuierlich die Schritte 1, 2 und 3 ausgeführt, um für jeden Punkt der Trajektorie einen spezifischen Sollwertdatensatz SW-DS zu berechnen. Alternativ, können, wie oben beschrieben, die Schritte 1, 2 und 3 auch vor einem Laserschneidvorgang zur Bestimmung der Sollwerte bzw. des Sollwertdatensatzes für alle Punkte der abzufahrenden Trajektorie berechnet werden unter Berücksichtigung des Einflusses der bewegten Massen.

Der Prozessor P kann in die Regelungseinheit RE integriert sein oder als separate Instanz über entsprechende Schnittstellen zum Datenaustausch in das System eingebunden sein. Dabei kann der Prozessor P die Funktion haben, auf Basis der erfassten Sensordaten, die Abweichungen zwischen den vom Modell PM, MM geschätzten Werten und den gemessenen Werten zu reduzieren durch Ausgabe des korrigierten Sollwertdatensatzes SW-DS$_{CORR}$.

Eine vereinfachte Implementierung und Umsetzung der Erfindung besteht darin, dass das Maschinenmodell nur Sollwerte generiert, unter Berücksichtigung von Randbedingungen, insbesondere der Maschine und deren Parametern, aber ohne Optimierung (keine Fehlerkorrektur). Damit kann die Schneidgeschwindigkeit und/oder Beschleunigung so eingestellt werden, dass die Maschine und deren Komponenten (Achsen, Antriebe, Lager etc.) nicht überbeansprucht werden.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die nachstehenden Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für Einstellungen von den beispielhaft erwähnten Prozessparametern, wie z.B. der Fokuslage, angewendet werden kann, sondern auch für andere Prozessparameter. Des Weiteren können die Bauteile der Vorrichtung bzw. Regelungseinheit auf mehrere physikalische Produkte verteilt realisiert sein.

**Patentansprüche**

1. Verfahren zur Berechnung eines orts- und zeitaufgelösten, kombinierten Sollwertdatensatzes (SW-DS) zur Steuerung und/oder Regelung eines Laserschneidprozesses einer Laserschneidmaschine (L) mit einem Schneidkopf während des Laserschneidens, insbesondere von Metallblechen oder -röhren, mit folgenden Verfahrensschritten:

   - Messen (1) von Sensordaten während des Laserschneidprozesses;
   - Bereitstellen eines in einem ersten Speicher (S1) gespeicherten Prozessmodells (PM), das den Laserschneidprozess repräsentiert und Zustandsdaten des Laserschneidprozesses und insbesondere ein daraus resultierendes Schneidergebnis schätzt;
   - Bereitstellen eines in einem zweiten Speicher (S2) gespeicherten Maschinenmodells (MM), das das kinematische Verhalten des Laserschneidkopfes während dessen Bewegung repräsentiert und Zustandsdaten eines Bewegungsprozesses und insbesondere das daraus resultierende Schneidergebnis schätzt;
   - wobei das Prozessmodell (PM) und das Maschinenmodell (MM) gekoppelt sind, insbesondere über einen Vorschubwert für den Laserkopf und/oder über einen Düsenabstandswert gekoppelt sind;
   - Zugreifen (2) auf das Prozessmodell (PM) in dem ersten Speicher (S1) und auf das Maschinenmodell (MM) in dem zweiten Speicher (S2) durch eine Regelungseinheit (RE), um auf Basis der geschätzten Zustandsdaten des Laserschneidprozesses und des Bewegungsprozesses den orts- und zeitaufgelösten, kombinierten Sollwertdatensatz (SW-DS) mit aufeinander abgestimmten Sollwerten für den Laserschneidprozess und Sollwerten für den Bewegungsprozess unter Berücksichtigung der eingelesenen Sensordaten zu berechnen (3).

2. Verfahren nach Anspruch 1, wobei das Verfahren weiterhin umfasst:

- Erfassen (1a) einer auf einer Benutzerschnittstelle (UI) eingegebenen Zielvorgabe zur Berechnung einer Kostenfunktion, auf deren Basis der kombinierte orts- und zeitaufgelöste Sollwertdatensatz (SW-DS) berechnet wird, wobei die Zielvorgabe mehrere, voneinander abhängige Vorgaben umfasst, insbesondere eine Schnittqualitätsvorgabe, eine Robustheitsvorgabe des Schneidvorganges und eine Produktivitätsvorgabe.

3. Verfahren nach einem der vorangehenden Ansprüche, bei dem der kombinierte orts- und zeitaufgelöste Sollwertdatensatz (SW-DS) Soll-Werte für direkte Prozessgrößen, wie Schneidgeschwindigkeit, Beschleunigung des Laserschneidkopfes, Laserleistung, Fokuslage, Pulsschema, Düsenabstand, Gasdruck, Beam Parameter Product / BPP, Fokusdurchmesser und/oder Spaltbreite umfasst und/oder Soll-Werte für indirekte Prozessgrößen, beinhaltend Streustrahlung, Spaltbreite, Neigung der Schneidkante, Temperaturverteilung in einer Schneidzone sowie Qualitätsmerkmale, beinhaltend Kantenrauhigkeit, Riefenbildung, Grat/Braue, Konturgenauigkeit.

4. Verfahren nach einem der vorangehenden Ansprüche, bei dem das Verfahren einen schnellen Regelkreis (srk) auf eine erste Klasse von schnell regelbaren Parametern anwendet, der den Laserschneidprozess gemeinsam mit dem Vorschub des Laserkopfes auf Basis von aktuell gemessenen Sensordaten und/oder auf Basis des berechneten Sollwertdatensatzes und/oder eines anhand von Sensordaten korrigierten Sollwertdatensatzes (SW-DS$_{CORR}$) regelt.

5. Verfahren nach einem der vorangehenden Ansprüche, bei dem das Verfahren einen langsamen Regelkreis (lrk) auf eine zweite Klasse von langsam veränderlichen Parametern anwendet, der den Laserschneidprozess gemeinsam mit dem Vorschub des Laserkopfes auf Basis von aktuell gemessenen Sensordaten und/oder auf Basis des berechneten Sollwertdatensatzes regelt.

6. Verfahren nach einem der vorangehenden Ansprüche 4 oder 5, bei dem der schnelle Regelkreis (srk) und/oder der langsame Regelkreis (lrk) als prädiktiver modell-basierter Regler (MPC) ausgebildet sind.

7. Verfahren nach einem der vorangehenden Ansprüche, bei dem das Prozessmodell (PM) und/oder das dynamische Maschinenmodell (MM) auf Basis von eingelesenen und an das jeweilige Modell zurückgeführten Sensordaten des ausgeführten Laserschneidprozesses kalibrierbar ist/sind.

8. Verfahren nach einem der vorangehenden Ansprüche, bei dem der erste Speicher (S1) und der zweite Speicher (S2) zusammen in einer gemeinsamen Einheit integriert sind.

9. Verfahren nach einem der vorangehenden Ansprüche, bei dem das Prozessmodell (PM) und/oder das dynamische Maschinenmodell (MM) in einem kombinierten Modell integriert sind, so dass der Zugriff durch die Regelungseinheit (RE) in einem Schritt erfolgt.

10. Verfahren nach einem der vorangehenden Ansprüche, bei dem der orts- und zeitaufgelöste, kombinierte Sollwertdatensatz (SW-DS) kontinuierlich Soll-Werte in Abhängigkeit von dem Zeitpunkt und/oder der Position auf einer Trajektorie berechnet.

11. Verfahren nach einem der vorangehenden Ansprüche, bei dem die Regelung des Laserschneidprozesses gemeinsam und in Abgleich mit der Regelung eines Vorschubes des Laserkopfes mittels des orts- und zeitaufgelösten, kombinierten Sollwertdatensatzes (SW-DS) erfolgt, wobei bei der Berechnung des orts- und zeitaufgelösten, kombinierten Sollwertdatensatzes (SW-DS) Vorgaben des Anwenders, die über eine Benutzerschnittstelle (UI) erfasst werden, berücksichtigt werden.

12. Verfahren nach einem der vorangehenden Ansprüche, bei dem das Prozessmodell (PM) und/ oder das Maschinenmodell (MM) und/oder Update-Daten von geographisch verteilten Laserschneidmaschinen (L) zum Kalibrieren des Prozessmodells (PM) und/ oder des Maschinenmodells (MM) auf einem zentralen Server gesammelt werden.

13. Regelungseinheit (RE) zur Berechnung eines orts- und zeitaufgelösten, kombinierten Sollwert-Datensatzes (SW-DS) zur Steuerung und/oder Regelung eines Laserschneidprozesses während des Laserschneidens mit einer Laserschneidmaschine L), mit:

- Einer Messdatenschnittstelle (MD-SS) zu zumindest einem Sensor (SENS) zum Messen von Sensordaten während des Schneidvorganges;

- Einer Prozessschnittstelle (P-SS) zu einem ersten Speicher (S1), in dem ein Prozessmodell (PM) gespeichert ist, das den Laserschneidprozess repräsentiert und Zustandsdaten des Laserschneidprozesses und insbesondere ein daraus resultierendes Schneidergebnis schätzt;

- Einer Maschinenschnittstelle (M-SS) zu einem zweiten Speicher (S2), in dem ein Maschinenmodell (MM) gespeichert ist, das das kinematische Verhalten des Laserschneidkopfes während dessen Bewegung repräsentiert und Zustandsdaten eines Bewegungsprozesses und insbesondere das daraus resultierende Schneidergebnis schätzt;

- Einem Prozessor (P), der zur Ausführung eines Algorithmus bestimmt ist, der das Prozessmodell (PM) und das Maschinenmodell (MM) koppelt, insbesondere über einen Vorschubwert und/oder über einen Düsenabstandswert koppelt;

- wobei der Prozessor (P) weiterhin dazu bestimmt ist, über die Prozessschnittstelle (P-SS) auf das Prozessmodell (PM) in dem ersten Speicher (S1) und über die Maschinenschnittstelle (M-SS) auf das Maschinenmodell (MM) in dem zweiten Speicher (S2) zuzugreifen, um auf Basis der geschätzten Zustandsdaten des Laserschneidprozesses und des Bewegungsprozesses den orts- und zeitaufgelösten, kombinierten Sollwertdatensatz (SW-DS) mit aufeinander abgestimmten Sollwerten für den Laserschneidprozess und Sollwerten für den Bewegungsprozess unter Berücksichtigung der eingelesenen Sensordaten zu berechnen.

**14.** Regelungseinheit (RE) nach dem unmittelbar vorangehenden Patentanspruch, bei der der zumindest eine Sensor (SENS) ausgewählt ist aus der Gruppe, bestehend aus: einer Kamera, einem spektralen Intensitätssensor, einem Gasdrucksensor, einem Gasflusssensor, einer Sensor zur Erfassung der Laserleistung, und zur Erfassung einer Strahlform des Laserstrahls, Sensoren für mechanische Subsysteme, insbesondere einem Sensor zur Erfassung einer Fokuslage, einer Schnittgeschwindigkeit, eines Düsenabstandes, Beschleunigungssensoren, insbesondere für Schneidkopf, Blech und/oder Maschinenachsen, Temperaturfühler zur Erfassung der Temperatur des Schneidgases, einer Schneidumgebung, eines zu schneidenden Werkstücks, Feuchtigkeitssensoren zur Erfassung der Feuchtigkeit des Schneidgases und/oder einer Umgebung, Sensoren (SENS) zur Erfassung einer Temperaturverteilung der Schmelze und akustische Sensoren umfassen.

**15.** Laserschneidsystem, mit:

- Einer Regelungseinheit (RE) zur Berechnung eines orts- und zeitaufgelösten, kombinierten Sollwertdatensatzes (SW-DS) zur Steuerung und/oder Regelung eines Laserschneidprozesses gemäß dem vorangehenden Anspruch und

- Einer Laserschneidmaschine (L) mit einem beweglichen Laserschneidkopf, der mit Antrieben entlang einer Geometrie gemäß dem von der Regelungseinheit (RE) berechneten Sollwertdatensatz (SW-DS) bewegt und betrieben wird.

FIG. 1

Kostenparameter

Kostenfunktion

Robustheit

Qualitätsparameter

FIG. 2

# FIG. 3

EP 3 984 686 A1

EP 3 984 686 A1

FIG. 4

EP 3 984 686 A1

# FIG. 5

EP 3 984 686 A1

# FIG. 6

srk

FIG. 7

SCHNEIDEN

1a

START → 1 → 2 → 3 → ENDE

EP 3 984 686 A1

FIG. 8

**Europäisches Patentamt**
**European Patent Office**
**Office européen des brevets**

# EUROPÄISCHER RECHERCHENBERICHT

Nummer der Anmeldung

EP 20 20 2334

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 2015/165549 A1 (BEUTLER BEAT [CH]) 18. Juni 2015 (2015-06-18) * Zusammenfassung; Ansprüche; Abbildungen * ----- | 1-15 | INV. B23K26/03 B23K26/38 B23K26/70 |
| A,D | KAPLAN A F H: "AN ANALYTICAL MODEL OF METAL CUTTING WITH A LASER BEAM", JOURNAL OF APPLIED PHYSICS, AMERICAN INSTITUTE OF PHYSICS, US, Bd. 79, Nr. 5, 1. März 1996 (1996-03-01), Seiten 2198-2208, XP000593803, ISSN: 0021-8979, DOI: 10.1063/1.361098 * das ganze Dokument * ----- | 1-15 | ADD. B23K101/04 B23K101/18 |

RECHERCHIERTE SACHGEBIETE (IPC)

B23K

Der vorliegende Recherchenbericht wurde für alle Patentansprüche erstellt

| Recherchenort | Abschlußdatum der Recherche | Prüfer |
|---|---|---|
| München | 30. April 2021 | Jeggy, Thierry |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 2334

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-04-2021

| Im Recherchenbericht angeführtes Patentdokument | Datum der Veröffentlichung | Mitglied(er) der Patentfamilie | Datum der Veröffentlichung |
|---|---|---|---|
| US 2015165549 A1 | 18-06-2015 | CN 104907700 A<br>EP 2883647 A1<br>US 2015165549 A1 | 16-09-2015<br>17-06-2015<br>18-06-2015 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015165549 A1

**In der Beschreibung aufgeführte Nicht-Patentliteratur**

- **A. F. H. KAPLAN.** An analytical model of metal cutting with a laser beam. *Journal of Applied Physics,* 1996, vol. 79 (5), 2198-2208
- **M. BRÜGMANN ; M. MURALT ; B. NEUENSCHWANDER ; S. WITTWER ; T. FEURER.** A theoretical model for reactive gas laser cutting of metals. *Lasers in Manufacturing Conference,* 2019
- **M. BRÜGMANN ; M. MURALT ; B. NEUENSCHWANDER ; S. WITTWER ; T. FEURER.** Optimization of Reactive Gas Laser Cutting Parameters based on a combination of Semi-Analytical modelling and Adaptive Neuro-Fuzzy Inference System (ANFIS). *Lasers in Manufacturing Conference,* 2019
- **W. SCHULZ ; M. NIESSEN ; U. EPPELT ; K. KOWALICK.** Simulation of Laser Cutting. Springer Netherlands, 2009
- **J. ZENG.** Mechanisms of brittle material erosion associated with high-pressure abrasive waterjet processing: A modeling and application study. *Doctoral Thesis,* 1992
- **J. ZENG ; J. OLSON ; C. OLSON.** THE ABRASIVE WATERJET AS A PRECISION METAL CUTTING TOOL. *10th American Waterjet Conference,* 1999
- **N. LANZ ; D. SPESCHA ; S. WEIKERT ; K. WEGENER.** Efficient Static and Dynamic Modelling of Machine Structures with Large Linear Motions. *International Journal of Automation Technology,* 2018, vol. 12, 622-630
- **TITUS HAAS.** Set Point Optimisation for Machine Tools. Verlag, 2018